# EUROPEAN PATENT APPLICATION

(11) **EP 1 635 200 A1**
(43) Date of publication of application: **15.03.2006**
(21) Application number: 05019696.3
(22) Date of filing: 09.09.2005
(51) Int. Cl.: G02B 6/00

(54) **Optical unit, method of manufacturing a light recycling member for the same and display apparatus having the same**

(30) Priority: 14.09.2004 KR 2004073313
(71) Applicant: Samsung Electronics Co., Ltd., Yeongtong-gu Suwon-si, Gyeonggi-do (KR)
(72) Inventor: Choi, Jin-Sung, Yongin-si Gyeonggi-do (KR); Park, Jong-Dae, Seodaemun-gu Seoul (KR); Kim, Dong-Hoon, Seocho-gu Seoul (KR)
(74) Representative: Dr. Weitzel & Partner

(57) **Abstract**

An optical unit (700) including a light source (10), the optical unit (700) converting an invisible light into a visible light, and a light recycling member (40) recycling the invisible light leaked from the light source (10) as the visible light. The light recycling member (40) is disposed at an advancing path of the visible light. Advantageously, the optical unit (700) may enhance an amount of the visible light emitted from the light source (10) to enhance brightness of images generated from a display apparatus, thereby improving display quality of the display apparatus.

## Description

### BACKGROUND OF THE INVENTION

### 1. Field of the Invention

The present invention relates to an optical unit, a method of manufacturing a light recycling member for the optical unit and a display apparatus including the optical unit. More particularly, the present invention relates to an optical unit capable of enhancing brightness, a method of manufacturing a light recycling member for the optical unit and a display apparatus including the optical unit.

### 2. Description of the Related Art

Various display apparatuses, such as a liquid crystal display device, an organic light emitting display device, and a plasma display panel have been developed.

The liquid crystal display device includes liquid crystal. The liquid crystal has an electrical characteristic of which an arrangement of the liquid crystal is changed in response to an electric field applied thereto, and an optical characteristic of which a light transmittance of the liquid crystal is changed in response to the arrangement of the liquid crystal.

The liquid crystal display device displays images using the electrical and optical characteristics of the liquid crystal. Thus, in order to display the image, the liquid crystal display device requires an electric field generating device applying the electric field to the liquid crystal and a light supplying device supplying the light to the liquid crystal.

As the light supplying device, a discharge lamp having a long lifespan a nd emitting a visible light, such as a natural sunlight, is applied to the liquid crystal display device.

However, the conventional discharge lamp emits an invisible light such as an ultraviolet light with the visible light.

As the ultraviolet light is emitted from the discharge lamp, an amount of the visible light from the discharge lamp decreases.

Further, the ultraviolet light from the discharge lamp causes the liquid crystal display device to deteriorate. The ultraviolet light from the discharge lamp discolors an optical unit of the liquid crystal display device, such as a light guide plate or an optical sheet, thereby deteriorating the display quality of the image. As a result, a life of the liquid crystal is shortened.

### SUMMARY OF THE INVENTION

The present invention provides an optical unit capable of enhancing brightness.

The present invention also provides a method of manufacturing a light recycling member employer in the optical unit.

The present invention also provides a display apparatus having the a bove optical unit.

In an exemplary embodiment, an optical unit includes a light source and a light recycling member. The light source generates an invisible light and converts the invisible light into a visible light. The light recycling member also converts the invisible light leaked from the light source into the visible light.

In another exemplary embodiment, a method of manufacturing a light recycling m ember t hat converts a n invisible light f rom a light source into a visible light is provided as follows. A fluorescent substance composition, into which a fluorescent substance and a polymer binder are mixed, is formed. The fluorescent substance composition is formed on an optical unit such that the fluorescent substance composition has a thin film shape, the forming using a photopolymerizeable reaction.

In another exemplary embodiment, a display apparatus includes a n optical unit and a display panel. The optical unit includes a light source and a light recycling m ember. The light source generates an invisible light and converts the invisible light into a visible light. The light recycling member converts the invisible light leaked from the light source into the visible light. The display panel changes the visible light into an image light having image information.

In exemplary embodiments, the light recycling member converts the invisible light leaked from the light source while the light source emits the visible light into the visible light.

The light recycling member enhances the light amount of the visible light emitted from the light source, thereby improving the display quality of the image displayed on the display panel.

### BRIEF DESCRIPTION OF THE DRAWINGS

The above and other advantages of the present invention will become readily apparent by reference to the following detailed description when considered in conjunction with the accompanying drawings wherein:
FIG. 1 is a schematic view of an exemplary embodiment of an optical unit having a light recycling member according to the present invention;
FIG. 2 is a schematic view of an exemplary embodiment of an optical unit having a light recycling member according to the present invention;
FIG. 3 is a schematic view of an exemplary embodiment of an optical unit having a light recycling member according to the present invention;
FIG. 4 is a schematic view of an exemplary embodiment of an optical unit having a light recycling member according to the present invention;
FIG. 5 is a schematic view of an exemplary embodiment of an optical unit having a light recycling member according to the present invention;
FIG. 6 is a schematic view of an exemplary embodiment of an optical unit having a light recycling member according to the present invention;
FIG. 7 is a schematic view of an exemplary embodiment of an optical unit having a light recycling member according to the present invention;
FIG. 8 is a schematic view of an exemplary embodiment of an optical unit having a light recycling member according to the present invention;
FIG. 9 is a schematic view of an exemplary embodiment of an optical unit having a light recycling member according to the present invention;
FIG. 10 is a schematic view of an exemplary embodiment of a structure of a light recycling member of an optical unit according to the present invention;
FIG. 11 is a cross-sectional view of an exemplary embodiment of an optical unit having a light recycling member according to the present invention;
FIG. 12 is a cross-sectional view of an exemplary embodiment of an optical unit having a light recycling member according to the present invention;
FIG. 13 is a cross-sectional view of an exemplary embodiment of an optical unit having a light recycling member according to the present invention;
FIG. 14 is a perspective view of an exemplary embodiment of an optical unit according to the present invention;
FIG. 15 is a cross-sectional view taken along line I-I' showing the optical unit in FIG. 14;
FIG. 16 is a flow chart illustrating an exemplary embodiment of a method of manufacturing a light recycling member according to the present invention;
FIG. 17 is a schematic view of an exemplary embodiment of a display apparatus according to the present invention;
FIG. 18 is a schematic view of an exemplary embodiment of a display apparatus according to the present invention;
FIG. 19 is a schematic view of an exemplary embodiment of a display apparatus according to the present invention;
FIG. 20 is a schematic view of an exemplary embodiment of a display apparatus according to the present invention;
FIG. 21 is a schematic view of an exemplary embodiment of a display apparatus according to the present invention.
FIG. 22 is a schematic view of an exemplary embodiment of a display apparatus according to the present invention;
FIG. 23 is a schematic view of an exemplary embodiment of a display apparatus according to the present invention; and
FIG. 24 is a schematic view of an exemplary embodiment of a display apparatus according to the present invention.

### DETAILED DESCRIPTION OF THE INVENTION

The invention now will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present. In contrast, when an element is referred to as being "directly on" another element, there are no intervening elements present. As used herein, the term "and/or" includes any and all combinations of one or more of the associated listed items.

It will be understood that, although the terms first, second, etc. may be used herein to describe various elements, these elements should not be limited by these terms. These terms are only used to distinguish one element from another. For example, a first thin film could be termed a second thin film, and, similarly, a second thin film could be termed a first thin film without departing from the teachings of the disclosure.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another elements as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower", can therefore, encompasses both an orientation of "lower" and "upper," depending of the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments of the present invention are described herein with reference to cross section illustrations that are schematic illustrations of idealized embodiments of the present invention. As such, variations from the shapes of the illustrations as a result, for example, of manufacturing techniques and/or tolerances, are to be expected. Thus, embodiments of the present invention should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated i n the figures are schematic i n nature and their shapes are not intended to illustrate the precise shape of a region and are not intended to limit the scope of the present invention.

Hereinafter, terminologies frequently used in the present invention are as follows.

A term "leakage" denotes that an invisible light is unexpectedly emitted from a light source.

A term "leakage" denotes that the invisible light is intentionally emitted from the light source.

A term "leakage" denotes that the invisible light not converted into a visible light through a fluorescent layer on the light source is emitted from the light source.

A term "recycle" denotes that the invisible light is converted into the visible light.

Hereinafter, the present invention will be explained in detail with reference to the accompanying drawings.

An exemplary embodiment of an optical unit according to an embodiment of the present invention includes a light recycling member converting an invisible light into a visible light. The light recycling member enhances brightness of images displayed on a liquid crystal display device. The liquid crystal display device displays the images using the visible light, and prevents deterioration of the liquid crystal display device due to the invisible light.

An exemplary embodiment of a light recycling member according to an embodiment of the present invention is disposed on to a plurality of parts of the liquid crystal display device without u singan adhesive. Advantageously, the optical unit may prevent reduction of the visible light from the light source since a composition of the light recycling member does not include the adhesive.

.In an exemplary embodiment of the light recycling member according to another embodiment of the present invention, the light recycling member is a photo-initiated, crosslinked polymer solution including, but not limited to, a fluorescent substance, a photopolymerizeable initiator and a photopolymerizeable monomer or a photopolymerizeable oligomer.

In exemplary embodiments of the light recycling member according to another embodiment of the present invention, the light recycling member includes, but is not limited to, an acryl-based ultraviolet light curable resin. The acryl-based ultraviolet light curable resin may be polymerized by a photopolymerizeable monomer or oligomer and a photomolymerizeable initiator. The photopolymerizeable monomer or oligomer may include an acrylate-based compound, an epoxy acrylate-based compound, a polyester acrylate-based compound, an urethane acrylate-based compound, or the like, as well as and any combination including at least one of the foregoing. The photopolymerizeable initiator may include an acetophenone-based compound, a benzophenone-based compound, a thioxanthone-based compound, or the like, as well as any combination including at least one of the foregoing.

In an exemplary embodiment of the light recycling member according to another embodiment of the present invention, a composition of the light recycling member i*s coated on a plurality of parts of a liquid crystal display apparatus and cured by exposure to an ultraviolet light emitted from an ultraviolet light lamp. Advantageously, the light recycling member may be formed in a thin film. In alternative embodiments, the light recycling member has a contraction ratio below about 20 %.

### Exemplary Embodiment 1

An example of the light recycling member of an optical unit according to an embodiment of the present invention may include fluorescent materials as follows.

2,2'(2,5-thiophenediyl)bis[5-(1-dimethylethyl)benzoxazole (1)

3-(5-chloro-1,3-benzoxazole-2-yl)-7-(diethylamino)coumarin (2)

2-cyano-1,3-N,N-diethylamino-3-iminobenzimidazolo[1,2-a]pyridino[3,4-b]-2H-chromene (3)

The fluorescent materials (1), (2) and (3) may be mixed into the light recycling member solution in equal amounts, or in any other proportion suitable for the purpose disclosed herein. For example, two weight percent of each of the fluorescent materials, based on an amount of methylmethacrylate monomer in the solution, may be mixed into the light recycling member solution. Additionally, 0.01 weight percent of a photopolymerizeable initiator, based on the amount of methylmethacrylate monomer in the solution, is mixed with the light recycling member solution including the fluorescent materials.

In order to form a polymer coated layer having a cross-linked structure, ten weight percent of hydrohexylmethylmethacrylate, based on the amount of methylmethacrylate monomer in the solution, is mixed into the light recycling member solution including the photopolymerizeable initiator. The solution may then be stirred in a stirrer for about one hour.

The light recycling member solution may be coated on a plurality of parts of a liquid crystal display apparatus and exposed to an ultraviolet light of about 1000 mW. The ultraviolet light may be emitted from an ultraviolet light lamp or like means. The methylmethacrylate monomer may be substantially completely photo-polymerized by exposing the photopolymerizeable initiator to the ultraviolet light, thereby forming the crosslinked polymer coated layer.

Advantageously the cross-linked structure of the polymer coated layer may include the hydrohexylmethymethacrylate polymerized as a network of the polymer coated layer,, thereby enhancing the strength of the polymer coated layer. Additionally, ultraviolet light applied to the polymer coated layer may be converted into a visible light since the three fluorescent materials are uniformly distributed in the cross-linked structure of the polymer coated layer.

### Exemplary Embodiment 2

An example of the light recycling member of an optical unit according to another embodiment of the present invention may include fluorescent materials as follows.

2,2(4,4-diophenolvinyl)dibenzoxazol (4)

3-(5-chloro-1,3-benzoxazole-2-yl)-7-(diethylamino)coumarin (5)

2-cyano-1,3-N,N-diethylamino-3-iminobenzimidazolo[1,2-a]pyridino[3,4-b]-2H-chromene (6)

The fluorescent materials (4), (5) and (6) may be mixed into the light recycling member solution in a ratio of 2:1:1.5, or in any other proportion suitable for the purpose disclosed herein. For example, ten weight percent of the fluorescent materials, based on an amount of methylmethacrylate monomer in the solution, is mixed into the light recycling member solution. Additionally, 0.05 weight percent of a photopolymerizeable initiator, based on the amount of the methylmethacrylate monomer, is mixed into the solution including the fluorescent materials.

In order to form a polymer coated layer having a cross-linked structure, ten weight percent of hydrohexylmethylmethacrylate, based on the amount of the methylmethacrylate in the solution, is mixed into the solution including the photopolymerizeable initiator. The solution may then be stirred in a stirrer for about one hour.

The light recycling member solution may be coated on a plurality of parts of a liquid crystal display apparatus and exposed to an ultraviolet light of about 1000 mW. The ultraviolet light may be emitted from an ultraviolet light lamp or like means. The methylmethacrylate monomer may be substantially completely photo-polymerized by exposing the photopolymerizeable initiator to the ultraviolet light, thereby forming the cross-linked polymer coated layer.

Advantaeously, the cross-linked structure of the polymer coated layer may include the hydrohexylmethymethacrylate polymerized as a network of the polymer coated layer, thereby enhancing the strength of the polymer coated layer. Additionally, an ultraviolet light applied to the polymer coated layer may be converted into a visible light since the three fluorescent materials are uniformly distributed in the cross-linked structure of the polymer coated layer.

### Exemplary Embodiment 3

An example of the light recycling member of an optical unit according to an embodiment of the present invention may include fluorescent materials as follows.

1,4-bis(benzoxazolyl-2-yl)naphthalene (7)

3-(5-chloro-1,3-benzoxazole-2-yl)-7-(diethylamino)coumarin (8)

2-cyano-1,3-N, N-d iethylamino-3-iminobenzimidazolo[1,2-a]pyrid ino[3,4-b]-2H-chromene (9)

The fluorescent materials (7), (8) and (9) may be mixed into the light recycling solution by a mixing ratio of 1:2:1.5, or in any other proportion suitable for the purpose disclosed herein. For example, four weight percent of the fluorescent materials, based on an amount of methylmethacrylate monomer in the solution, is mixed into the light recycling member solution. Additionally, 0.02 weight percent of a photopolymerizeable initiator, based on the amount of the methylmethacrylate monomer in the solution, is mixed into the solution including the fluorescent materials.

In order to form a polymer coated layer having a cross-linked structure, thirteen weight percent of hydrohexylmethylmethacrylate, based on the amount of the methylmethacrylate in the solution, is mixed with the solution including the photopolymerizeable initiator. The solution may then be stirred in a stirrer for about one hour.

The light recycling member may be coated on a plurality of parts of a liquid crystal display apparatus and exposed to an ultraviolet light of about 1000 mW. The ultraviolet light may be emitted from an ultraviolet light lamp or like means. The methylmethacrylate monomer may be substantially completely photo-polymerized by exposing the photopolymerizeable initiator to the ultraviolet light, thereby forming the polymer coated layer.

Advantageously, the cross-linked structure of the polymer coated layer may include the hydrohexylmethymethacrylate polymerized as a network of the polymer coated layer, thereby enhancing the strength of the polymer coated layer. Additionally, an ultraviolet light applied to the polymer coated layer may be converted into a visible light since the three fluorescent materials are uniformly distributed in the cross-linked structure of the polymer coated layer.

### Exemplary Embodiment 4

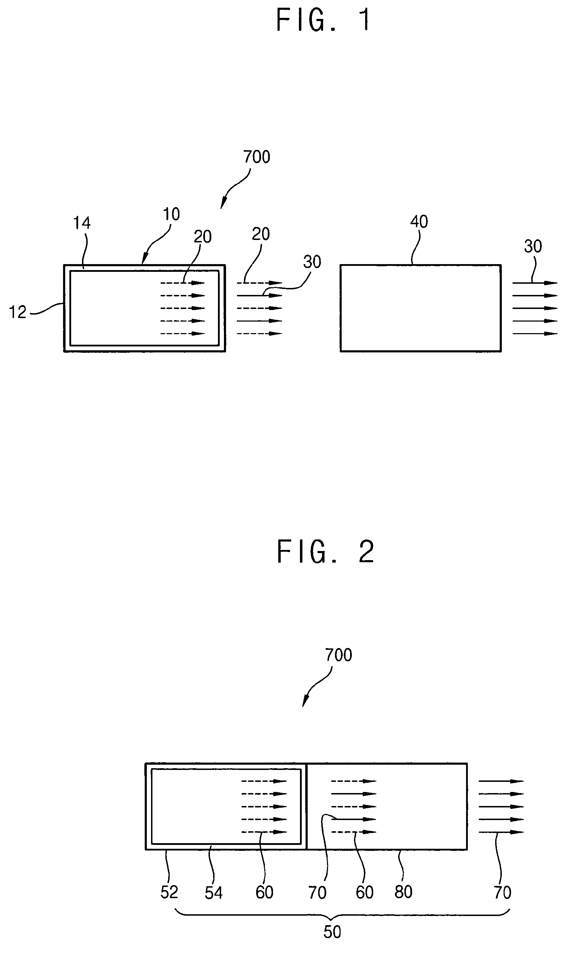

FIG. 1 is a schematic view of an exemplary embodiment of an optical unit having a light recycling member according to an embodiment of the present invention.

Referring to FIG. 1, an optical unit 700 includes a light source 10 and a light recycling member 40.

The light source 10 converts an invisible light 20 including, but not limited to, an ultraviolet light, into a visible light 30. In the exemplary embodiment, the light source 10 may employ a cold cathode fluorescent lamp (not shown) as a discharge lamp thereof.

The light source 10 may include a working gas (not shown), including, but not limited to, mercury, and a fluorescent layer 14. When a discharge voltage is applied to the light source 10, a discharge occurs in a body 12 of the light source, to thereby generate the invisible light 20 due to the working gas. The fluorescent layer 14 may convert the invisible light 20 into the visible light 30.

The light source 10 mainly emits the visible light 30, however the invisible light 20 may be leaked from the light source 10. When the invisible light 20 is leaked from the light source 10, parts of the liquid crystal display device disposed adjacent to the light source 10 may be damaged due to the invisible light 20.

The light recycling member 40 recycles the invisible light 20 leaked from the light source 10 and converts it to the visible light 30. Advantageously, a display apparatus on which images may be displayed using the visible light 30 may have enhanced brightness, thereby reducing, or effectively preventing, the deterioration of the liquid crystal due to the invisible light 20.

The light recycling member 40 is disposed on parts of the liquid crystal display device adjacent to the light source 10 by exposure to ultraviolet light without using an adhesive. Advantageously, a decrease in an amount of the visible light 30 recycled by the light recycling member 40 is reduced, or effectively prevented, as the light recycling member 40 is not attached employing the adhesive.

The light recycling member 40 is a photo-crosslinkable (or photosetting) polymer solution that may include a fluorescent substance, a photopolymerizeable initiator and a photopolymerizeable monomer or a photopolymerizeable oligomer.

The light recycling member may include a acryl-based ultraviolet light curable resin. The acryl-based ultraviolet light curable resin may be polymerized by exposing the photopolymerizeable monomer or the oligomer to ultraviolet light. The photopolymerizeable monomer or the oligomer may include, but is not limited to acrylate-based compound, epoxy acrylate-based compound, polyester acrylate-based compound, urethane acrylate-based compound, or the like, as well as any combination including at least one of the foregong. The photopolymerizeable initiator may include, but is not limited toa acetophenone-based compound, abenzophenone-based compound, athioxanthone-based compound, or the like, as well as any combination including at least one of the foregoing. The light recycling member, after curing by exposure to the ultraviolet light, may have a contraction ratio under about 20 %.

The light recycling member 40 may transmit the visible light 30 emitted from the light source 10. The light recycling member 40 may also convert the invisible light 20 that is emitted from the light source 10 with the visible light 30 into the visible light 30. Advantageously, the light recycling member 40 may increase anamount of the visible light 30 u sed to display images and reduce, o r effectively p revent, the deterioration of the parts of the liquid crystal display device adjacent to the light source 10.

### Exemplary Embodiment 5

FIG. 2 is a schematic view of an exemplary embodiment of an optical unit having a light recycling member according to another embodiment of the present invention.

Referring to FIG. 2, an optical unit 700 includes a light source 50 integrally formed with a light recycling member 80.

The light source 50 may convert an invisible light 60, including, but not limited to, an ultraviolet light, into a visible light 70. In this exemplary embodiment, the light source 50 mayemploy a cold cathode fluorescent lamp (not shown) as a discharge lamp thereof.

The light source 50 may include a body 52. The light source 50 may also include a working gas (not shown), including, but not limited to, mercury, and a fluorescent layer 54. When a discharge voltage is applied to the light source 50, a discharge may occur in a body 52 of the light source 50, to thereby generate the invisible light 60 from the working gas. The fluorescent layer 54 may convert the invisible light 60 into the visible light 70.

The light source 50 mainly emits the visible light 70, however the invisible light 60 may be leaked from the light source 50. When the invisible light 60 is leaked from the light source 50, parts of the liquid crystal display device disposed adjacent to the light source 50 may be damaged due to the invisible light 60.

The light recycling member 80 recycles the invisible light 60 leaked from the light source 50 and converts it to the visible light 70. Advantageously, a display apparatus on which images are displayed using the visible light 70, may have enhanced brightness, thereby reducing, or effectively preventing, the deterioration of the liquid crystal due to the invisible light 60.

The light recycling member 80 is disposed on parts of a liquid crystal display device adjacent to the light source 50 by exposure to ultraviolet light without using an adhesive. Advantageously, a decrease in an amount of the visible light 70 is reduced, or effectively prevented, as the light recycling member 80 is not attached employing the adhesive.

The light recycling member 80 is a photo-crosslinkable (or photosetting) polymer solution that may include a fluorescent substance, a photopolymerizeable initiator and a photopolymerizeable monomer or a photopolymerizeable oligomer.

The light recycling member 80 may include an acryl-based ultraviolet light curable resin. The acryl-based ultraviolet light curable resin may be polymerized by exposing the photopolymerizeable monomer or the oligomer to ultraviolet light. The photopolymerizeable monomer or the oligomer may include, but is not limited to acrylate-based compound, epoxy acrylate-based compound, polyester acrylate-based compound, urethane acrylate-based compound, or the like, as well as any combination including at least one of the foregoing. The photopolymerizeable initiator, may include, but is not limited to, acetophenone-based compound, benzophenone-based compound, thioxanthone-based compound, or the like, as well as any combination including at least one of the foregoing. The light recycling member 80 after curing by exposure to the ultraviolet light may have a contraction ratio under about 20 %.

Referring to Figure 2, the light recycling member 80 may be integrally formed with the light source 50. In alternative embodiments, the light recycling member 80 may be formed on a surface of the light source 50.
The light recycling member 80 may transmit the visible light 70 emitted from the light source 50. The light recycling member 80 may also convert the invisible light 60 that is emitted from the light source 50 with the visible light 70 into the visible light 70. Advantageously, the light recycling member 80 may increase the amount of the visible light 70 used to display images and reduce, or effectively prevent, the deterioration of the parts of the liquid crystal display device adjacent to the light source 50.

### Exemplary Embodiment 6

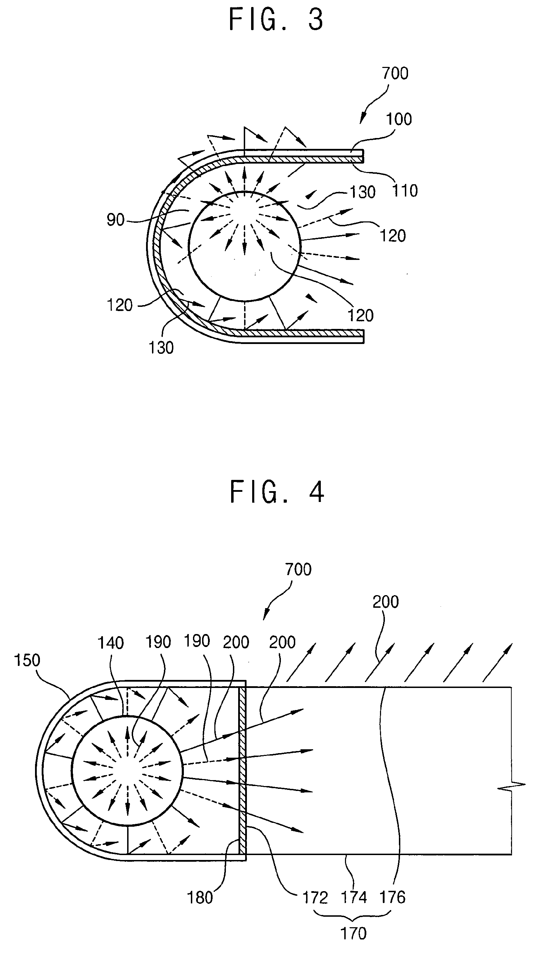

FIG. 3 is a schematic view of an exemplary embodiment of an optical unit having a light recycling member according to another embodiment of the present invention.

Referring to FIG. 3, an optical unit 700 includes a light source 90, a light reflecting member 100 and a light recycling member 80.

The light source 90, as shown in FIG. 3, has a cylindrical shape, but other configurations of the light source 90 may be used as is suitable for the purpose disclosed herein. The light source 90 may convert an invisible light 120 into a visible light 130. In this exemplary embodiment, the light source 90 may employ a cold cathode fluorescent lamp (not shown) as a discharge lamp thereof. The light source 90 mainly emits the visible light 130, however the invisible light 120 may be leaked from the light source 90.

The light reflecting member 100 partially covers the light source 90 to condense the visible light 130 and the invisible light 120 emitted from the light source 90. In this exemplary embodiment, the light reflecting member 100 has a semicylindrical shape, but other shapes of the light reflecting member 100 may be employed as is suitable for the purpose disclosed herein.

The light recycling member 110 may be formed on an inner face of the light reflecting member 100. The light recycling member 110 recycles the invisible light 120 leaked from the light source 90 and converts it to the visible light 130. Advantageously, a display apparatus on which images are displayed using the visible light 130 may have enhanced brightness, thereby reducing, or effectively preventing, the deterioration of the liquid crystal due to the invisible light 120.

The light recycling member 110 is disposed on the inner face of the light reflecting member 100 by exposure to ultraviolet light without using an adhesive. Advantageously, a decrease in an amount of the visible light 130 is reduced, or effectively prevented, as the light recycling member 110 is not attached employing the adhesive.

The light recycling member 110 is a photo-crosslinkable polymer solution that may include a fluorescent substance, a photopolymerizeable initiator and a photopolymerizeable monomer or a photopolymerizeable oligomer.

Tthe light recycling member 110 may include a acryl-based ultraviolet light curable resin. The acryl-based ultraviolet light curable resin may be polymerized by exposing the photopolymerizeable monomer or the oligomer to ultraviolet light. The photopolymerizeable monomer or the oligomer may include, but is not limited to acrylate-based compound, epoxy acrylate-based compound, polyester acrylate-based compound, urethane acrylate-based compound, or the like, as well as any combination including at least one of the foregoing. The photopolymerizeable initiator may include, but is not limited to,acetophenone-based compound, benzophenone-based compound, thioxanthone-based compound, or the like, as well as any combination including at least one of the foregoing. The light recycling member 110 after curing by exposure to the ultraviolet light, may have a contraction ratio under about 20 %.

The I ight recycling m ember 110 converts the trivial a mount of the invisible light 120 that is leaked and emitted from the light source 90 into the visible light 130 and directs the converted visible light 130 towards the light-reflecting member 100. Advantageously, the light recycling member 110 may increase the amount of the visible light 130 used to display images and reduce, or effectively prevent, the deterioration of parts of the liquid crystal display device adjacent to the light source 90.

### Exemplary Embodiment 7

FIG. 4 is a schematic view of an exemplary embodiment of an optical unit having a light recycling member according to another embodiment of the present invention.

Referring to FIG. 4, an optical unit 700 includes a light source 140, a light reflecting member 150, a light guide plate 170 and a light recycling member 180.

The light source 140, as shown in FIG. 4, has a cylindrical shape, but other configurations of the light source 140 may be used as is suitable for the purpose disclosed herein. The light source 140 may convert an invisible light 190 generated therein into a visible light 200. In this exemplary embodiment, the light source 140 may employ a cold cathode fluorescent lamp (not shown) as a discharge lamp thereof. The light source 140 mainly emits the visible light 200, however a small amount of the invisible light 190 may be leaked from the light source 140.

The light reflecting member 150, as shown in FIG. 4, has a semicylindrical shape suitable for receiving the light source 140, but other configurations of the light reflecting member 150 may be used as is suitable for the purpose disclosed herein. The light reflecting member 150 may reflect the visible light 200 radially emitted from the light source 140 and the invisible light 190 leaked from the light source 140 towards a first direction. In order to reflect the invisible light 190 and the visible light 200, the light reflecting member 165 may include, but is not limited to, a brass plate or an aluminum plate.

Referring to FIG. 4, the light guide plate 170 is disposed adjacent to the light source 140 and coupled to the light reflecting member 150. The light guide plate 170 varies an optical distribution and an advancing direction of the visible light 200 from the light source 140.

The light guide plate 170 has a rectangular plate-like shape, but other shapes may be used as is suitable for the purpose disclosed herein. The light guide plate 170, as shown in FIG. 4, includes a plurality of side faces, a light reflecting face 174 and a light exiting face 176.

The side faces may include a light incident face 172 into which the invisible light 190 and the visible light 200 are incident. The light reflecting face 174 may be connected to the side faces such that the visible light 200 incident into the light incident face 172 may be reflected to the light exiting face 176 by the light reflecting face 174. The light exiting face 176 may also be disposed opposite to, or "facing" the light reflecting face 174, such that the visible light 200 reflected from the light reflecting face 174 exits through the light exiting face 176.

The light recycling member 180 may be formed on the light incident face 172 of the light guide plate 170. The light recycling member 180 may recycle the invisible light 190 leaked from the light source 140 as the visible light 200. Advantageously, a display apparatus on which images are displayed using the visible light 200 may have enhanced brightness, thereby reducing, or effectively preventing, the deterioration of the liquid crystal due to the invisible light 190.

The light recycling member 180 may be disposed on the light incident face 172 of the light guide plate 170 by exposure to ultraviolet light without using an adhesive. Advantageously, a decrease in an amount of the visible light 200 is reduced, or effectively prevented, as the light recycling member 180 is not attached using the adhesive.

The light recycling member 180 is aphoto-crosslinkable polymer solution that may include a fluorescent substance, a photopolymerizeable initiator and a photopolymerizeable monomer or a photopolymerizeable oligomer.

The light recycling member 180 may include an acryl-based ultraviolet light curable resin. The acryl-based ultraviolet light curable resin is polymerized by expsosing the photopolymerizeable monomer or the oligomer to the ultraviolet light. The photopolymerizeable monomer or the oligomer include, but is not limited to, acrylate-based compound, epoxy acrylate-based compound, polyester acrylate-based compound, urethane acrylate-based compound, or the like, as well as any combination including at least one of the foregoing. The photopolymerizeable initiator may include, but is not limited to, acetophenone-based compound, benzophenone-based compound, thioxanthone-based compound, or the like, as well as any combination including at least one of the foregoing. The light recycling member 180 after curing by exposure to the ultraviolet light may have the contraction ratio under about 20%.

The light recycling member 180 converts the invisible light 190 emitted from the light source 140 into the visible light 200. Advantageously, the invisible light 190 leaked from the light source 140 is recycled by the light recycling member 180 as the visible light 200,becoming incident into the light guide plate 170, thereby increasing the amount of the visible light 200 from the light guide plate 170.

### Exemplary Embodiment 8

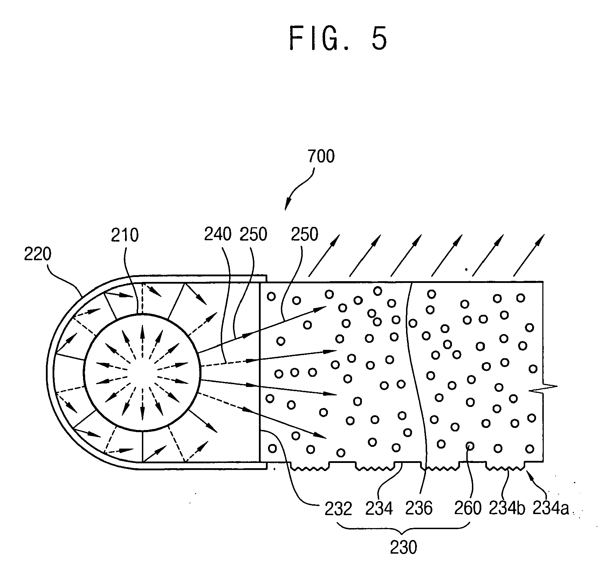

FIG. 5 is a schematic view of an exemplary embodiment of an optical unit having a light recycling member according to another embodiment of the present invention.

Referring to FIG. 5, an optical unit 700 includes a light source 210, a light reflecting member 220, a light guide plate 230 and a light recycling member 260.

The light source 210, as shown in FIG. 5, has a cylindrical shape, but other configurations of the light source 210 may be used as is suitable for the purpose disclosed herein. The light source 210 converts an invisible light 240 generated therein into a visible light 250. The light source 210 may employ a cold cathode fluorescent lamp (not shown) as a discharge lamp thereof. The light source 210 mainly emits the visible light 250, however a small amount of the invisible light 240 may be leaked from the light source 210.

The light reflecting member 220, as shown in FIG. 5, has a semicylindrical shape suitable for receiving the light source 210, but other shapes of the light reflecting member 220 may be used as is suitable for the purpose disclosed herein. The light reflecting member 220 reflects the visible light 250 radially emitted from the light source 210 and the invisible light 240 leaked from the light source 210 towards a first direction. In order to reflect the invisible light 240 and the visible light 250, the light reflecting member 220 may include, but is not limited to, a brass plate or an aluminum plate.

Referring to FIG. 5, the light guide plate 230 is disposed adjacent to the light source 210 and coupled to the light reflecting member 220. The light guide plate 230 varies an optical distribution and an advancing direction of the visible light 250 from the light source 210.

The light guide plate 230 has a rectangular plate-like shape, but other shapes may be used as is suitable for the purpose disclosed herein. The light guide plate 230 may include a plurality of side faces, a light reflecting face 234 and a light exiting face 236.

The side faces may include a light incident face 232 into which the invisible light 240 and the visible light 250 are incident. The light reflecting face 234 may be connected to the side faces and reflect the visible light 250 incident through the light incident face 232 to the light exiting face 236.

The light reflecting face 234 may further include a plurality of dot prism patterns 234a. The dot prism patterns 234a are protruded from the light reflecting face 234 and have a circular plate. The dot prism patterns 234a may be formed by partially recessing the light reflecting face 234.

The dot prism patterns 234a may include a prism portion 234b formed on a surface of the dot prism patterns 234a. The prism portion 234b may enhance the light reflected from the light reflecting face 234.

In the present embodiment, the prism portion 234b of each of the dot prism patterns 234a may be arranged in substantially parallel to each other or in a different direction from each other. The prism portion 234b of each of the dot prism patterns 234a may have at least one bent portion on the surface of the light reflecting 234.

The light exiting face 236 may be disposed opposite to or "facings" the light reflecting face 234, such that the visible light 250 reflected from the light reflecting face 234 exits through the light exiting face 236.

Referring to FIG. 5, the light recycling member 260 may include a plurality of beads that are irregularly distributed into the light guide plate 230, but other distributions of the beads of the recycling member 260 may also be employed as is suitable for the purpose disclosed herein. The light recycling member 260 recycles the invisible light 240 leaked from the light source 210 into the visible light 250. Advantageously, a display apparatus on which images are displayed using the visible light 250 may have enhanced brightness, thereby reducing, or effectively preventing, the deterioration of the liquid crystal due to the invisible light 240.

The light recycling member 260 distributed into the light guide plate 230 in the bead shape is aphoto-crosslinkable polymer solution that may include a fluorescent substance, a photopolymerizeable initiator and a photopolymerizeable monomer or a photopolymerizeable oligomer. When the photo-crosslinkable polymer solution is exposed to ultraviolet light, the light recycling member 260 may be formed to have a substantially spherical shape.

The light recycling member 260 in the bead shape configuration may include an acryl-based ultraviolet light curable resin. The acryl-based ultraviolet light curable resin is polymerized by exposing the photopolymerizeable monomer or the oligomer to the ultraviolet light. The photopolymerizeable monomer or the oligomer may include, but is not limited to acrylate-based compound, epoxy acrylate-based compound, polyester acrylate-based compound, urethane acrylate-based compound, or the like, as well as any combination including at least one of the foregoin. The photopolymerizeable initiator may include, but is not limited to acetophenone-based compound, benzophenone-based compound, thioxanthone-based compound, or the like, as well as any combination including at least one of the foregoing.

The light recycling member 260 converts the invisible light 240 incident into the light guide plate 230 through the light incident face 232 into the visible light 250. Advantageously, the invisible light 240 leaked from the light source 210 is converted into the visible light 250 by the light recycling member 260, thereby increasing the amount of the visible light 250 applied to the light guide plate 230 from the light source 210.

### Exemplary Embodiment 9

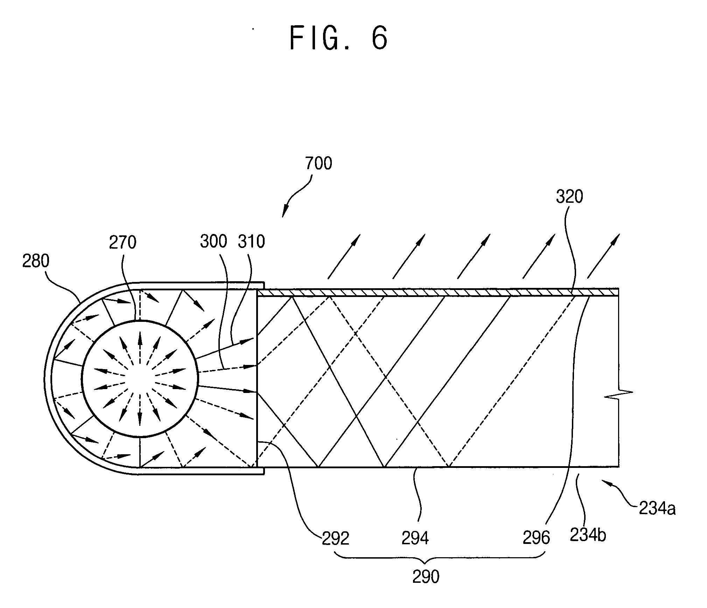

FIG. 6 is a schematic view of an exemplary embodiment of an optical unit having a light recycling member according to aother embodiment of the present invention.

Referring to FIG. 6, an optical unit 700 includes a light source 270, a light reflecting member 280, a light guide plate 290 and a light recycling member 320.

The light source 270 has a cylindrical shape, but other shapes of the light source 270 may be used as is suitable for the purpose disclosed herein. The light source 270 converts an invisible light 300 generated therein into a visible light 310. In the present embodiment, the light source 270 may employ a cold cathode fluorescent lamp (not shown) as a discharge lamp thereof. The I ight source 2 70 mainly emits the visible light 310, however the invisible light 300 may be leaked from the light source 270.

The light reflecting member 280 has a semicylindrical shape suitable for receiving the light source 270, but other shapes of the light reflecting member 280 may be used as is suitable for the purpose disclosed herein. The light reflecting member 280 reflects the visible light 310 radially emitted from the light source 270 and the invisible light 300 leaked from the light source 270 towards a first direction. In order to reflect the invisible light 300 and the visible light 310, the light reflecting member 280 may include, but is not limited to, a brass plate or an aluminum plate.

The light guide plate 290 may be disposed adjacent to the light source 270 and coupled to the light reflecting member 280. The light guide plate 290 varies an optical distribution and an advancing direction of the visible light 310 from the light source 270.

Referring to FIG. 6, The light guide plate 290 may have a rectangular plate-like shape, but other shapes of the light guide plate 290 may be used as is suitable for the purpose disclosed herein. The light guide plate 290 may include a plurality of side faces, a light reflecting face 294 and a light exiting face 296.

The side faces may include a light incident face 292 into which the invisible light 310 and the visible light 300 are incident. The light reflecting face 294 may be connected to the side faces, and reflect the visible light 300 incident through the light incident face 292 to the light exiting face 296. The light exiting face 296 may be disposed opposite, or "facing" the light reflecting face 294, such that the visible light 310 reflected from the light reflecting face 294 exits through the light exiting face 296.

Referring to FIG. 6, the light recycling member 320 may be formed on the light exiting face 296 of the light guide plate 290. The light recycling member 320 recycles the invisible light 300 leaked from the light source 270 as the visible light 310. Advantageously, a display apparatus on which images are displayed using the visible light 310 may have enhanced brightness, thereby reducing, or effectively preventing, the deterioration of the liquid crystal due to the invisible light 300.

The light recycling member 320 maybe disposed on the light exiting face 296 of the light guide plate 290 by an exposure to ultraviolet light without using an adhesive. Advantageously, a decrease in an amount of the visible light 310 is reduced, or effectively prevented, as the light recycling member 320 is not attached using the adhesive.

The light recycling member 320 is a photo-crosslinkable polymer solution that may include a fluorescent substance, a photopolymerizeable initiator and a photopolymerizeable monomer or a photopolymerizeable oligomer.

The light recycling member 320 may include an acryl-based ultraviolet light curable resin. The acryl-based ultraviolet light curable resin is polymerized by exposing the photopolymerizeable monomer or the oligomer to the ultraviolet light. The photopolymerizeable monomer or the oligomer may include, but is not limited to acrylate-based compound, epoxy acrylate-based compound, polyester acrylate-based compound, urethane acrylate-based compound, or the like, as well as any combination including at least one of the foregoing. The photopolymerizeable initiator may include, but is not limited to acetophenone-based compound, benzophenone-based compound, thioxanthone-based compound, or the like, as well as any combination including at least one of the foregoing. The light recycling member 320 after curing by exposure to the ultraviolet light, may have a contraction ratio under about 20%.

The light recycling member 320 converts the invisible light 300 leaking from the light source 270 and exiting through the light incident face 292 and the light exiting face 296 into the visible light 310. Advantageously, the invisible light 300 leaked from the light source 270 may be converted into the visible light 310 by the light recycling member 320, thereby increasing the amount of the visible light 310 from the light guide plate 290.

### Exemplary Embodiment 10

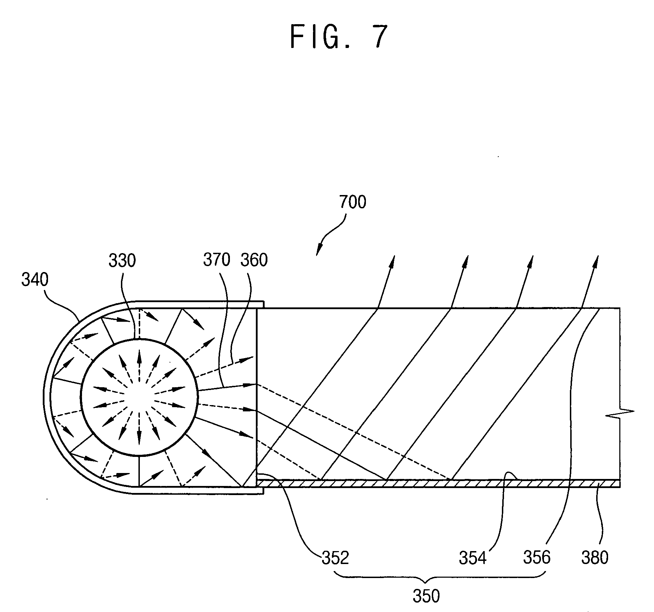

FIG. 7 is a schematic view of an exemplary embodiment of an optical unit having a light recycling member according to another embodiment of the present invention.

Referring to FIG. 7, an optical unit 700 includes a light source 330, a light reflecting member 340, a light guide plate 350 and a light recycling member 380.

The light source 330 has a cylindrical shape, but other shapes of the light source 330 may be used as is suitable for the purpose described herein. The light source 330 converts an invisible light 360 generated therein into a visible light 370.

The light source 330 may employ a cold cathode fluorescent lamp (not shown) as a discharge lamp thereof. The light source 330 mainly emits the visible light 370, however the invisible light 360 may be leaked from the light source 330.

The light reflecting member 340 has a semicylindrical shape suitable for receiving the light source 330, but other shapes of the light reflecting member 340 may be used as is suitable for the purpose disclosed herein. The light reflecting member 340 reflects the visible light 370 radially emitted from the light source 330 and the invisible light 360 leaked from the light source 330 towards a first direction. In order to reflect the invisible light 360 and the visible light 370, the light reflecting member 340 may include, but is not limited to, a brass plate or an aluminum plate.

The light guide plate 350 may be disposed adjacent to the light source 330 and coupled to the light reflecting member 340. The light guide plate 350 varies an optical distribution and an advancing direction of the visible light 370 from the light source 330.

Referring to FIG. 7, the light guide plate 350 has a rectangular plate-like shape, but other shapes of the light guide plate 350 may be used as is suitable for the purpose described herein. The light guide plate 350 may include a plurality of side faces, a light reflecting face 354 and a light exiting face 356.

The side faces may include a light incident face 352 into which the invisible light 360 and the visible light 370 are incident. The light reflecting face 354 is connected to the side faces, and reflects the visible light 370 incident through the light incident face 352 to the light exiting face 356. The light exiting face 356 may be disposed opposite of, or "facing", the light reflecting face 354, and the visible light 370 reflected from the light reflecting face 354 exits through the light exiting face 356.

The light recycling member 380 may be formed on the light reflecting face 354 of the light guide plate 350. The light recycling member 380 recycles the invisible light 360 leaked from the light source 330 as the visible light 370. Advantageously, a display apparatus on which images are displayed using the visible light 370 may have enhanced brightness, thereby reducing, or effectively preventing, the deterioration of the liquid crystal due to the invisible light 360.

The light recycling member 380 may be disposed on the light reflecting face 354 of the light guide plate 350 by an exposure to ultraviolet light without using an adhesive. Advantageously, a decrease in an amount of the visible light 370 is reduced, or effectively prevented, as the light recycling member 380 is not attaching using the adhesive.

The light recycling member 380 is a photo-crosslinkable polymer solution that may include a fluorescent substance, a photopolymerizeable initiator and a photopolymerizeable monomer or a photopolymerizeable oligomer.

The light recycling member 380 may include an acryl-based ultraviolet light curable resin. The acryl-based ultraviolet light curable resin is polymerized by exposing the photopolymerizeable monomer or the oligomer to the ultraviolet light. The photopolymerizeable monomer or the oligomer may include, but is not limited to acrylate-based compound, epoxy acrylate-based compound, polyester acrylate-based compound, urethane acrylate-based compound, or the like, as well as any combination including at least one of the foregoing. The photopolymerizeable initiator may include, but is not limited to acetophenone-based compound, benzophenone-based compound, thioxanthone-based compound, or the like, as well as including any combination including at least one of the foregoing. The light recycling member 380 after curing by exposure to the ultraviolet light, may have a contraction ratio under about 20 %.

The light recycling member 380 converts the invisible light 360 leaked from the light source 330 and incident to the light reflecting face 354 through the light incident face 352 into the visible light 370. Advantageously, the invisible light 360 leaked from the light source 330 may be converted into the visible light 370 by the light recycling member 380, thereby increasing the amount of the visible light 370 from the light guide plate 350.

### Exemplary Embodiment 11

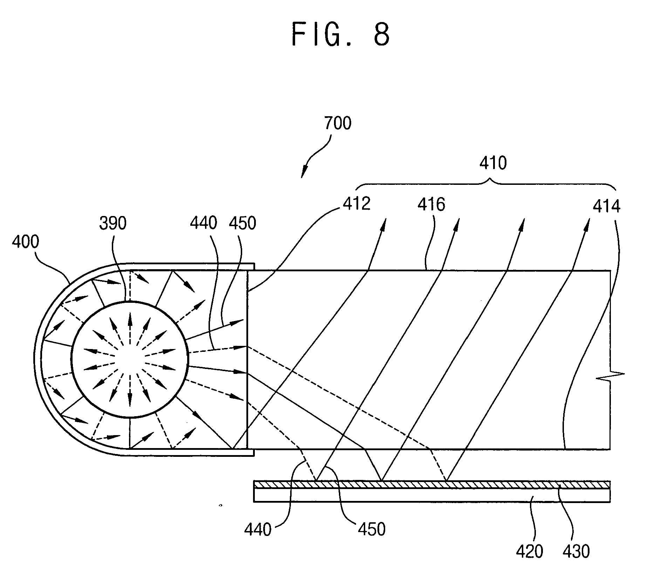

FIG. 8 is a schematic view of an exemplary embodiment of an optical unit having a light recycling member according to another embodiment of the present invention.

Referring to FIG. 8, an optical unit 700 includes a light source 390, a light reflecting member 400, a light guide plate 410, a reflecting plate 420 and a light recycling member 430.

The light source 390 has a cylindrical shape, but other shapes of the light source 390 may be used as is suitable for the purpose described herein. The light source 390 converts an invisible light 440 generated therein into a visible light 450. The light source 390 may employ a cold cathode fluorescent lamp (not shown) as a discharge lamp thereof. The light source 390 mainly emits the visible light 450, however, the invisible light 440 may be leaked from the light source 390.

The light reflecting member 400 has a semicylindrical shape suitable for receiving the light source 390, but other shapes of the light reflecting member 400 may be used as is suitable for the purpose described herein. The light reflecting member 400 reflects the visible light 450 radially emitted from the light source 390 and the invisible light 440 leaked from the light source 390 towards a first direction. In order to reflect the invisible light 440 and the visible light 450, the light reflecting member 400 may include, but is not limited to, a brass plate or an aluminum plate.

The light guide plate 410 may be disposed adjacent to the light source 390 and coupled to the light reflecting member 400. The light guide plate 410 varies an optical distribution and an advancing direction of the visible light 450 from the light source 390.

Referring to FIG. 8, the light guide plate 410 may have a rectangular plate-like shape, but other shapes of the light guide plate 410 may be used as is suitable for the purpose disclosed herein. The light guide plate 410 may include a plurality of side faces, a light reflecting face 414 and a light exiting face 416.

The side faces may include a light incident face 412 into which the invisible light 440 and the visible light 450 are incident. The light reflecting face 414 may be connected to the side faces, and reflect the visible light 450 incident through the light incident face 412 to the light exiting face 416. The light exiting face 416 may be disposed opposite, or "facing" the light reflecting face 414, such that the visible light 450 reflected from the light reflecting face 414 exits through the light exiting face 416.

The reflecting plate 420 may be disposed next to and facing the light reflecting face 414. The reflecting plate 420 reflects the visible light 450 leaked from the light guide plate 410 to the light reflecting face 414.

Tthe light recycling member 430 may be formed on the reflecting plate 420. For example, as shown in FIG. 8, the light recycling member 430 may be disposed between the light reflecting face 414 of the light guide plate 410 and the reflecting plate 420. The light recycling member 430 recycles the invisible light 440 leaked from the light source 390 as the visible light 450. Advantageously, a display apparatus on which images are displayed using the visible light 450 may have enhanced brightness, thereby reducing, or effectively preventing, the deterioration of the liquid crystal due to the invisible light 440.

The light recycling member 430 may be disposed on the reflecting plate 420 by an exposure to ultraviolet light without using an adhesive. Advantageously, a decrease in an amount of the visible light 450 is reduced, or effectively prevented, as the light recycling member 430 is not attached using the adhesive.

The light recycling member 430 is a photo-crosslinkable polymer solution that may include a fluorescent substance, a photopolymerizeable initiator and a photopolymerizeable monomer or a photopolymerizeable oligomer.

The light recycling member 430 may include an acryl-based ultraviolet light curable resin. The acryl-based ultraviolet light curable resin is polymerized by exposing the photopolymerizeable monomer or the oligomer to the ultraviolet light. The photopolymerizeable monomer or the oligomer may include, but is not limited toacrylate-based compound, epoxy acrylate-based compound, polyester acrylate-based compound, urethane acrylate-based compound, or the like, as well as any combination including at least one of the foregoing. The photopolymerizeable initiator may include, but is not limited to, acetophenone-based compound, benzophenone-based compound, thioxanthone-based compound, or the like, as well as any combination including at least one of the foregoing. The light recycling member 430, after curing by exposure to the ultraviolet light, may have a contraction ratio under about 20%.

The light recycling member 430 converts the invisible light 440 leaked from the light guide plate 410 to the reflecting plate 420 through the light reflecting face 414 into the visible light 450. Advantageously, the invisible light 440 leaked from the light source 390 may be converted into the visible light 450 by the light recycling member 430 formed on the reflecting plate 420, thereby increasing the amount of the visible light 450 from the light guide plate 410.

### Exemplary Embodiment 12

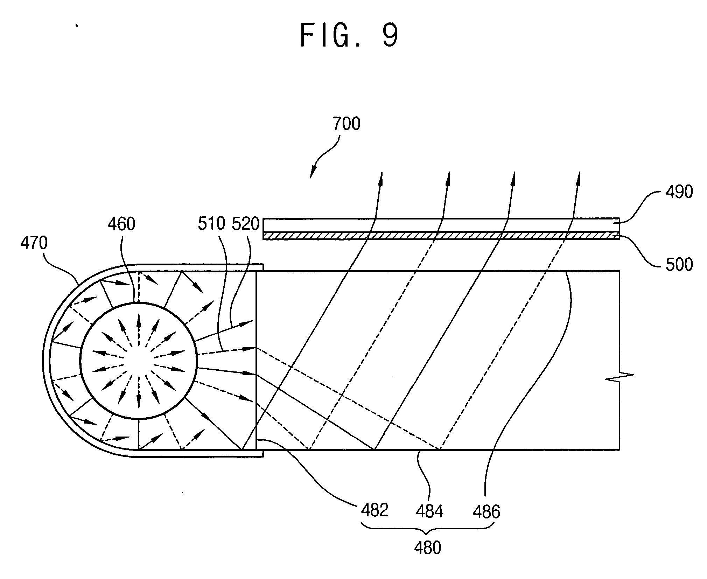

FIG. 9 is a schematic view of an exemplary embodiment of an optical unit having a light recycling member according to another embodiment of the present invention..

Referring to FIG. 9, an optical unit 700 includes a light source 460, a light reflecting member 470, a light guide plate 480, an optical member 490 and a light recycling member 500.

The light source 460 has a cylindrical shape, but other shapes of the light source 460 may be used as is suitable for the purpose disclosed herein. The light source 460 converts an invisible light 510 generated therein into a visible light 520. The light source 460 may employ a cold cathode fluorescent lamp (not shown) as a discharge lamp thereof. The light source 460 mainly emits the visible light 520, however the invisible light 510 may be leaked from the light source 460.

The light reflecting member 470 has a semicylindrical shape suitable for receiving the light source 460, but other shapes of the light reflecting member 470 may be used as is suitable for the purpose disclosed herein. The light reflecting member 470 reflects the visible light 520 radially emitted from the light source 460 and the invisible light 510 leaked from the light source 460 towards a first direction. In order to reflect the invisible light 510 and the visible light 520, the light reflecting member 470 may include, but is not limited to, a brass plate or an aluminum plate.

The light guide plate 480 may be disposed adjacent to the light source 460 and coupled to the light reflecting member 470. The light guide plate 480 varies an optical distribution and an advancing direction of the visible light 520 from the light source 460.

Referring to FIG. 9, the light guide plate 480 has a rectangular plate-like shape, but other shapes of the light guide plate 480 may be used as is suitable for the purpose disclosed herein. The light guide plate 480 may include a plurality of side faces, a light reflecting face 484 and a light exiting face 486.

The side faces may include a light incident face 482 into which the invisible light 510 and the visible light 520 are incident. The light reflecting face 484 may be connected to the side faces, and reflect the visible light 520 incident through the light incident face 482 to the light exiting face 486. The light exiting face 486 may be disposed opposite of, or "facing" the light reflecting face 484, such that the visible light 520 reflected from the light reflecting face 484 exits through the light exiting face 486.

The optical member 490 may be disposed next to the light recycling member 500 and facing the light exiting face 486. The optical member 490 varies an optical distribution of the visible light 520 emitted from the light guide plate 480. The optical member 490 may include a diffusing sheet (not shown) that diffuses the visible light 520 for brightness uniformity, a prism sheet (not shown) that condenses the visible light 520 and a bright enhancing sheet (not shown) that enhances the brightness of the visible light 520.

The light recycling member 500 may be formed on at least one of the diffusing sheet, the prism sheet and the brightness enhancing sheet of the optical member 490. The light recycling member 500 recycles the invisible light 510 leaked from the light source 460 as the visible light 520. Advantageously, a display apparatus on which images are displayed using the visible light 520 may have enhanced brightness, thereby reducing, or effectively preventing, the deterioration of the liquid crystal due to the invisible light 510.

The light recycling member 500 may be disposed on the optical member 490 by exposure to ultraviolet light without using an adhesive. Advantageously, a decrease in an amount of the visible light 520 is reduced, or effectively prevented, as the light recycling member 500 is not attaching with the adhesive.

The light recycling member 500 is a photo-crosslinkable polymer solution that may include a fluorescent substance, a photopolymerizeable initiator and a photopolymerizeable monomer or a photopolymerizeable oligomer.

The light recycling member 500 may include an acryl-based ultraviolet light curable resin. The acryl-based ultraviolet light curable resin is polymerized by exposing the photopolymerizeable monomer or the oligomer to the ultraviolet light. The photopolymerizeable monomer or the oligomer may include, but is not limited to,the acrylate-based compound, epoxy acrylate-based compound, polyester acrylate-based compound, urethane acrylate-based compound, or the like, as well as any combination including at least one of the foregoing. The photopolymerizeable initiator may include, but is not limited to, acetophenone-based compound, benzophenone-based compound, thioxanthone-based compound, or the like, as well as any combination including at least one of the foregoing. The light recycling member 500, after curing by exposure to the ultraviolet light, may have a contraction ratio under about 20 %.

The light recycling member 500 converts the invisible light 510 leaked from the light source 460 through the light exiting face 486 into the visible light 520. Advantageously, the invisible light 510 leaked from the light source 460 may be converted into the visible light 520 by the light recycling member 500 formed on the optical member 490, thereby increasing the amount of the visible light 520 from the light guide plate 480.

### Exemplary Embodiment 13

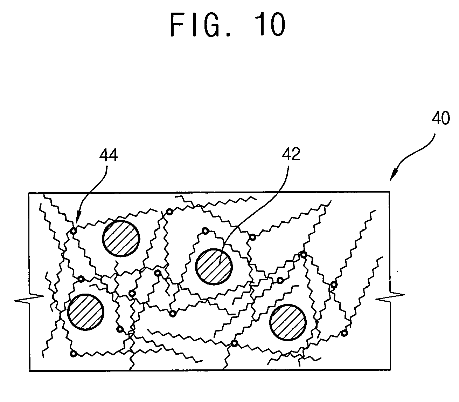

FIG. 10 is a schematic view of an exemplary embodiment of a structure of a light recycling member of an optical unit according to another embodiment of the present invention.

Referring to FIGS. 1 and 10, a light recycling member 40 converts an invisible light 20 leaked from a light source 10 into a visible light 30.

In order to convert the invisible light 20 into the visible light 30, the light recycling member 40 may include a fluorescent substance 42 and a polymer binder 44 allowing the fluorescent substance 42 to have a uniform shape such as a thin film, for example. In alternative embodiments, a composition of the fluorescent substance 42 and the polymer binder 44 may be provided as a fluid solution.

The fluorescent substance 42 converts the invisible light 20, including, b ut not limited to, an ultraviolet light, into the visible light 30.

In the exemplary embodiment of the fluorescent substance 42 of the light recycling member 40 according to an embodiment of the present invention may include fluorescent materials as follows. The fluorescent materials may be used alone or in a mixture thereof.

2,2'(2,5-thiophenediyl)bis[5-(1-dimethylethyl)benzoxazole (1)

3-(5-chloro-1,3-benzoxazole-2-yl)-7-(diethylamino)coumarin (2)

2-cyano-1,3-N,N-diethylamino-3-iminobenzimidazolo[1,2-a]pyridino[3,4-b]-2H-chromene (3)

Each of the fluorescent (1), (2) and (3) materials may be mixed into the light recycling member solution in equal amounts. For example, two weight percent of each of fluorescent materials, based on an amount of methylmethacrylate monomer in the solution, is mixed into the light recycling member solution. Additionally, 0.01 weight percent of a photopolymerizeable initiator, based on the amount of methylmethacrylate monomer in the solution, is mixed into the solution including the fluorescent materials.

In order to form a polymer coated layer having a cross-linked structure, ten weight percent of hydrohexylmethylmethacrylate, based on the amount of methylmethacrylate in the solution, is mixed into the solution including the photopolymerizeable initiator.

Another exemplary embodiment of the light recycling member of an optical unit according to another embodiment of the present invention may include fluorescent materials as follows.

2,2(4,4-diophenolvinyl)dibenzoxazol (4)

3-(5-chloro-1,3-benzoxazole-2-yl)-7-(diethylamino)coumarin) (5)

2-cyano-1,3-N,N-diethylamino-3-iminobenzimidazolo[1,2-a]pyridino[3,4-b]-2H-chromene (6)

The fluorescent materials (4), (5) and (6) may be mixed into the light recycling member solution in a ratio of about 2:1:1.5. For example, ten weight percent of the fluorescent materials, based on an amount of methylmethacrylate monomer in the solution, are mixed into the light recycling member solution. Additionally, 0.05 weight percent of a photopolymerizeable initiator, based on the amount of the methylmethacrylate monomer in the solution, is mixed into the solution including the fluorescent materials. In order to form a polymer coated layer having a cross-linked structure, ten weight percent of hydrohexylmethylmethacrylate, based on the amount of the methylmethacrylate in the solution, is mixed with the soltuion including the photopolymerizeable initiator.

Further, another exemplary embodiment of the light recycling member of an optical unit according to another embodiment of the present invention may include fluorescent materials as follows.

1,4-bis(benzoxazolyl-2-yl)naphthalene (7)

3-(5-chloro-1,3-benzoxazole-2-yl)-7-(diethylamino)coumarin (8)

2-cyano-1,3-N,N-diethylamino-3-iminobenzimidazolo[1,2-a]pyridino[3,4-b]-2H-chromene (9)

The fluorescent materials (7), (8) and (9) may be mixed into the light recycling member solution in a mixing ratio of 1:2:1.5. For example, four weight percent of the fluorescent materials, based on an amount of methylmethacrylate monomer in the solution, is mixed into the light recycling member solution. Additionally, 0.02 weight percent of a photopolymerizeable initiator, based on the amount of the methylmethacrylate monomer in the solution, is mixed into the solution including the fluorescent materials.

In order to form a polymer coated layer having a cross-linked structure, thirteen weight percent of h ydrohexylmethylmethacrylate, based on the amount of the methylmethacrylate in the solution, is mixed into the solution including the photopolymerizeable.

In order to mix the fluorescent substance 42 with the light recycling member 40, the polymer binder 44 may include, but is not limited to, an ultraviolet light initiator, a photopolymerizeable monomer and a photopolymerizeable oligomer, as well as any combination including at least one of the foregoing.

Examples of the ultraviolet light initiator may include, but are not limited to, an acetophenone-based initiator, a benzophenone-based initiator, a thioxanthone-based initiator, or the like, including any of a number of initiators suitable for the purpose described herein. These initiators may be used alone or in a combination thereof.

Examples of the photopolymerizeable monomer may include, but are not limited to, an acrylate-based monomer, an epoxy acrylate-based monomer, a polyester acrylate-based monomer, an urethane acrylate-based monomer, or the like, including any of a number of monomers suitable for the purpose described herein. These monomers may be used alone or in a combination thereof.

Examples of the photopolymerizeable oligomer may include, but are not limited to, an acrylate-based oligomer, an epoxy acrylate-based oligomer, a polyester acrylate-based oligomer, an urethane acrylate-based oligomer, or the like, including any of a number of monomers suitable for the purpose described herein. These oligomers may be used alone or in a combination thereof.

### Exemplary Embodiment 14

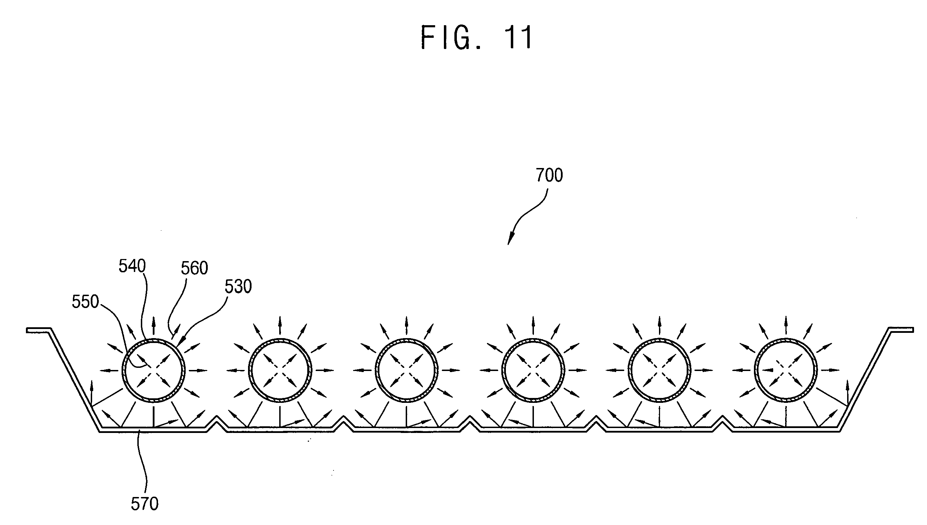

FIG. 11 is a cross-sectional view of an exemplary embodiment of an optical unit having a light recycling member according to another embodiment of the present invention.

Referring to FIG. 11, an optical unit 700 includes a plurality of light sources 530 to which a light recycling member 540 may be integrally formed.

The light sources 530 may convert an invisible light 550, including, but not limited to, an ultraviolet light, into a visible light 560. The light sources 530 may be a cold cathode ray-tube lamp (not shown) as a discharge lamp.

The light sources 530 may include a working gas (not shown) including, but not limited to, mercury and a fluorescent layer (not shown). In order to generate a discharge inside the light sources 530, a discharge voltage maybe applied to the light sources 530 such that the working gas generates the invisible light 550. The fluorescent layer of the light sources 530 may then convert the invisible light 550 into the visible light 560.

In exemplary embodiments, each of the light sources 530 may be extended in a first direction and arranged in a second direction substantially perpendicular to the first direction. Advantageously, the light sources 530 may be suitable for applying the visible light 560 to a large-sized liquid crystal display apparatus.

Referring to FIG. 11, a reflecting plate 570 may be provided under the light sources 530. The reflecting plate 570 reflects the visible light 560 emitted from the light sources 530 toward the light sources 530, thereby enhancing an amount of the visible light 560.

The light sources 530 mainly emit the visible light 560, however a small amount of the invisible light 550 may be leaked from the light sources 530. When the invisible light 550 is leaked from the light sources 530, the amount of the visible light 560 is reduced, and parts of the liquid crystal display device disposed adjacent to the light sources 530 may be damaged due to the invisible light 550.

The light recycling member 540 may be formed on a surface of each of the light sources 530. The light recycling member 540 recycles the invisible light 550 leaked from the light sources 530 as the visible light 560. Advantageously, a display apparatus on which images are displayed using the visible light 560 may have enhanced brightness, thereby reducing, or effectively preventing, the deterioration of the liquid crystal due to the invisible light 550.

The light recycling member 540 may be disposed adhered on the light sources 530 arranged in parallel by exposure to ultraviolet light without using an additional adhesive. Advantageously, a decrease in an amount of the visible light 560 is reduced, or effectively prevented, as the light recycling member 540 is not attached with the additional adhesive.

The light recycling member 540 is a photo-crosslinkable polymer solution that may include a fluorescent substance, a photopolymerizeable initiator, and a photopolymerizeable monomer or a photopolymerizeable oligomer.

The light recycling member 540 may include an acryl-based ultraviolet light curable resin. The acryl-based ultraviolet light curable resin is polymerized by exposing the photopolymerizeable monomer or the oligomer to the ultraviolet light. The photopolymerizeable monomer or the oligomer may include, but is not limited to an acrylate-based compound, an epoxy acrylate-based compound, a polyester acrylate-based compound, an urethane acrylate-based compound, or the like, as well as any combination including at least one of the foregoing. The photopolymerizeable initiator may include, but is not limited to, an acetophenone-based compound, a benzophenone-based compound, a thioxanthone-based compound, or the like, as well as any combination including at least one of the foregoing. The light recycling member 540 after curing by exposure to the ultraviolet light may have a contraction ratio under about 20 %.

The light recycling member 540 may transmit the visible light 560 emitted from the light sources 530 and convert the invisible light 550 emitted from the light sources 530 into the visible light 560. Advantageously, the light recycling member 540 may increase the light amount of the visible light 560 used to display images and reduce, or effectively prevent, the deterioration of the parts of the liquid crystal device adjacent to the light sources 530.

### Exemplary Embodiment 15

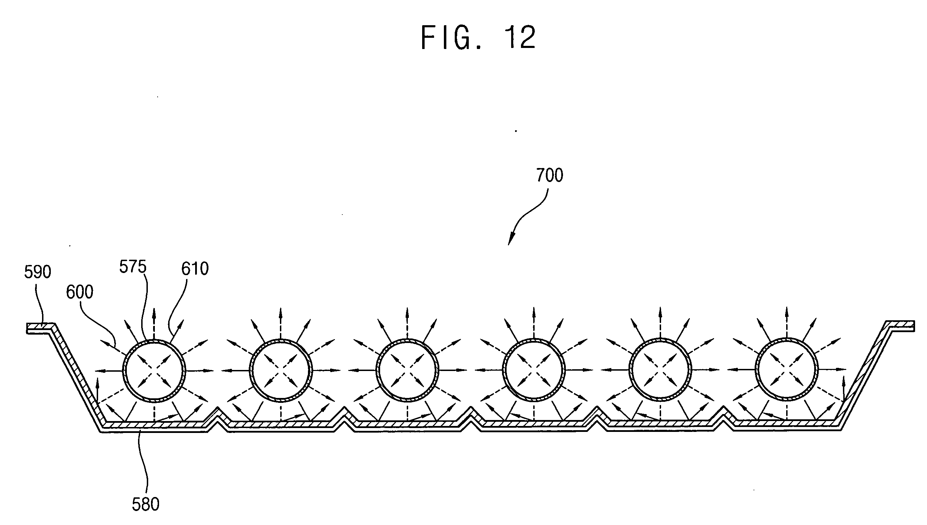

FIG. 12 is a cross-sectional view of an exemplary embodiment of an optical unit having a light recycling member according to another embodiment of the present invention.

Referring to FIG. 12, an optical unit 700 includes a plurality of light sources 575, a reflecting plate 580 and a light recycling member 590.

The light sources 575 may convert an invisible light 600 including, but not limited to, an ultraviolet light, into a visible light 610. The light sources 575 may be a cold cathode ray-tube lamp (not shown) as a discharge lamp.

The light sources 575 may include a working gas (not shown) including, but not limited to, mercury and a fluorescent layer (not shown). In order to generate a discharge inside the light sources 575, a discharge voltage may be applied to the light sources 575 such that the working gas generates the invisible light 600. The fluorescent layer of the light sources 575 converts the invisible light 600 into the visible light 610.

In exemplary embodiments, each of the light sources 575 may be extended in a first direction and arranged in a second direction substantially perpendicular to the first direction. Advantageously, the light sources 570 may be suitable for applying the visible light 610 to a large-sized liquid crystal display apparatus.

Referring to FIG. 12, the reflecting plate 580 may be provided under the light sources 575. The reflecting plate 580 reflects the visible light 610 emitted from the light sources 575 toward the light sources 575, thereby enhancing an amount of the visible light 610.

The light sources 575 mainly emit the visible light 610, however, the invisible light 600 may be leaked from the light sources 575. When the invisible light 600 is leaked from the light sources 575, the amount of the visible light 610 is reduced, and parts of the liquid crystal display device disposed adjacent to the light sources 575 may be damaged due to the invisible light 600.

The light recycling member 590 may be formed on a surface of the reflecting plate 580 facing the light sources 575. The light recycling member 590 recycles the invisible light 600 leaked from the light sources 575 as the visible light 610. Advantageously, a display apparatus on which images are displayed using the visible light 610 may have enhanced brightness, thereby reducing, or effectively preventing, the deterioration of the liquid crystal due to the invisible light 600.

The light recycling member 590 may be disposed on the reflecting plate 580 by exposure to ultraviolet light without using an additional adhesive. Advantageously, a decrease in an amount of the visible light 610 is reduced, or effectively prevented, as the light recycling member 590 is not attached by the additional adhesive.

The light recycling member 590 is a photo-crosslinkable polymer solution that may include a fluorescent substance, a photopolymerizeable initiator, and a photopolymerizeable monomer or a photopolymerizeable oligomer.

The light recycling member 590 may include an acryl-based ultraviolet light curable resin. The acryl-based ultraviolet light curable resin is polymerized by exposing the photopolymerizeable monomer or the oligomer to the ultraviolet light. The photopolymerizeable monomer or the oligomer may include, but is not limited to an acrylate-based compound, an epoxy acrylate-based compound, a polyester acrylate-based compound, an urethane acrylate-based compound, or the like, as well as any combination including at least one of the foregoing. The photopolymerizeable initiator may include, but is not limited to, an acetophenone-based compound, a benzophenone-based compound, a thioxanthone-based compound, or the like, as well as including at least one of the foregoing. The light recycling member 590 after curing by exposure to the ultraviolet light may have a contraction ratio under about 20 %.

The light recycling member 590 converts the invisible light 600 emitted from the light sources 575 into the visible light 610 to reflect the visible light 610 toward the light sources 575. Advantageously, the light recycling member 590 may increase the amount of the visible light 610 used to display images and reduce, or effectively prevent, the deterioration of the parts of the liquid crystal display device adjacent to the light sources 575 due to the invisible light 600.

### Exemplary Embodiment 16

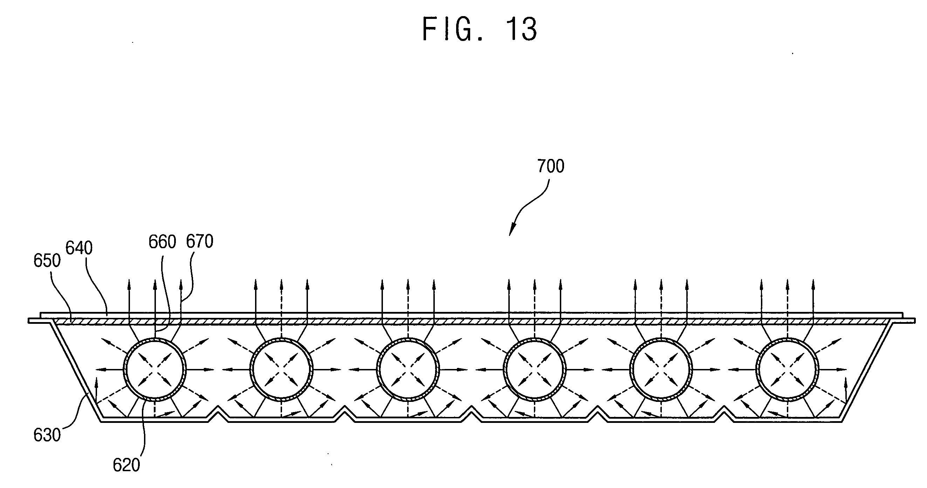

FIG. 13 is a cross-sectional view of an exemplary embodiment of an optical unit having a light recycling member according to another embodiment of the present invention.

Referring to FIG. 13, an optical unit 700 includes a plurality of light sources 620, a reflecting plate 630, an optical member 640 and a light recycling member 650.

The light sources 620 convert an invisible light 660 including, but not limited to, an ultraviolet light into a visible light 670. The light sources 620 may be a cold cathode ray-tube lamp (not shown) as a discharge lamp.

The light sources 620 may include a working gas (not shown) including, but not limited to, mercury and a fluorescent layer (not shown). In order to generate a discharge inside the light sources 620, a discharge voltage may be applied to the light sources 620 such that the working gas generates the invisible light 660. The fluorescent layer of the light sources 620 converts the invisible light 660 into the visible light 670.

In exemplary embodiments, each of the light sources 620 may be extended in a first direction and arranged in a second direction substantially perpendicular to the first direction. Advantageously, the light sources 620 may be suitable for applying the visible light 670 to a large-sized liquid crystal display apparatus.

Referring to FIG. 13, the reflecting plate 630 may be provided under the light sources 620. Advantageously, the reflecting plate 630 reflects the visible light 670 emitted from the light sources 620 toward the light sources 620, thereby enhancing an amount of the visible light 670.

The light sources 620 mainly emit the visible light 670, however, the invisible light 660 may be leaked from the light sources 620. When the invisible light 660 is leaked from the light sources 620, the amount of the visible light 670 is reduced, and parts of the liquid crystal display device disposed adjacent to the light sources 620 may be damaged due to the invisible light 660.

The optical member 640 may be disposed on the light sources 620 to improve optical characteristics of the visible light 670 emitted from the light sources 620. The optical member 640 may include, but is not limited to, a diffusing plate or a diffusing sheet. The optical member 640 diffuses the visible light 670 from the light sources 620 to reduce, or effectively prevent, a bright line caused by the light sources 620 spaced apart from each other.

The light recycling member 650 may be formed on a surface of the optical member 640 facing the light sources 620. The light recycling member 650 recycles the invisible light 660 leaked from the light sources 620 as the visible light 670. Advantageously, a display apparatus on which images are displayed using the visible light 670 may have enhanced brightness, thereby reducing, or effectively preventing, the deterioration of the liquid crystal due to the invisible light 660.

The light recycling member 650 may be disposed on the optical member 640 by exposure to ultraviolet light without using an additional adhesive. Advantageously, a decrease in an amount of the visible light 670 is reduced, or effectively prevented, as the light recycling member 650 is not attached with the additional adhesive.

The light recycling member 650 is a photo-crosslinkable polymer solution that may include a fluorescent substance, a photopolymerizeable initiator, and a photopolymerizeable monomer or a photopolymerizeable oligomer.

The light recycling member 650 may include an acryl-based ultraviolet light curable resin. The acryl-based ultraviolet light curable resin is polymerized by exposing the photopolymerizeable monomer or the oligomer to the ultraviolet light. The photopolymerizeable monomer or the oligomer may include, but is not limited to,s an acrylate-based compound, an epoxy acrylate-based compound, a polyester acrylate-based compound, an urethane acrylate-based compound, or the like, as well as any combination including at least one of the foregoing. The photopolymerizeable initiator may include, but is not limited to, an acetophenone-based compound, a benzophenone-based compound, a thioxanthone-based compound, or the like, as well as any combination including at least one of the foregoing. The light recycling member 650, after curing by exposure to the ultraviolet light may have a contraction ratio under about 20 %.

The light recycling member 650 converts the invisible light 670 emitted from the light sources 620 into the visible light 670. Advantageously, the light recycling member 650 may increase the amount of the visible light 670 used to display images and reduce, or effectively prevent, the deterioration of the parts of the liquid crystal display device adjacent to the light sources 620 due to the invisible light 660.

### Exemplary Embodiment 17

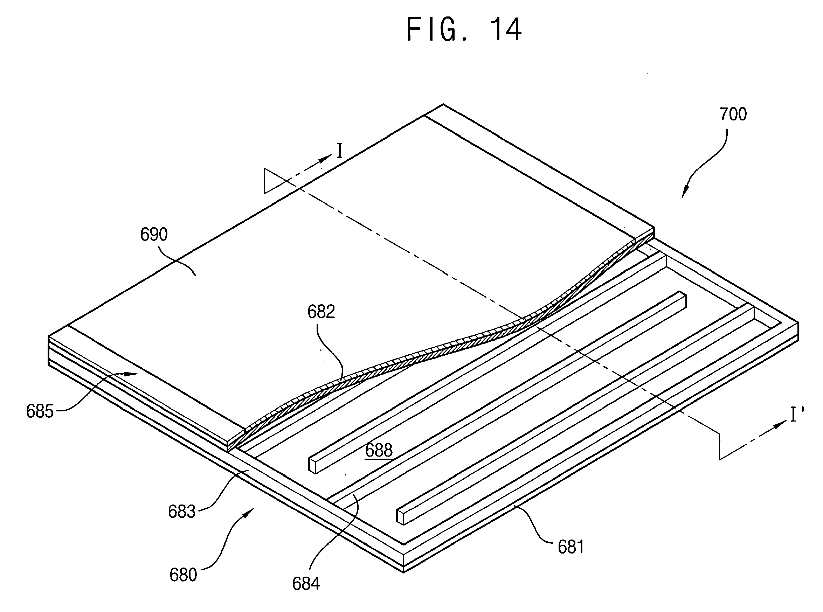

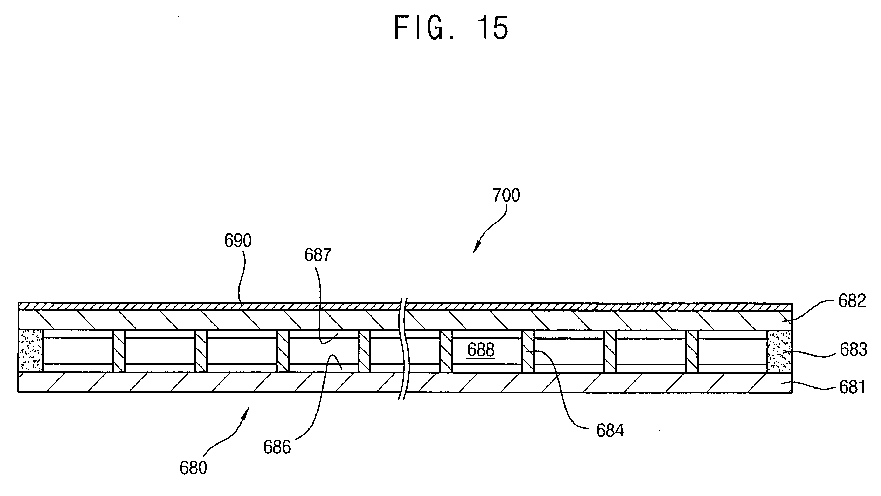

FIG. 14 is a perspective view of an exemplary embodiment of an optical unit according to another embodiment of the present invention. FIG. 15 is a cross-sectional view taken along line I-I' showing the optical unit in FIG. 14.

Referring to FIGS. 14 and 15, an optical unit 700 has a plate-like shape, but other shapes of the optical unit 700 may be used as is suitable for the purpose disclosed herein. The optical unit 700 may include a body 680 and a light recycling member 690 to convert an invisible light to a visible light.

The body 680 may include a first substrate 681, a second substrate 682, a sealing member 683, a space-dividing member 684 and a discharge electrode 685.

The first substrate 681 may include a transparent plate-like shape, but other shapes of the first substrate 681, such as commensurate with the optical unit 700, may be used as is suitable for the purpose disclosed herein. In alternative embodiments, the first substrate 681 may include a transparent glass substrate and may have a substantially rectangular plate-like shape.

The second substrate 682 has a plate-like shape, but other shapes of the second substrate 682, such as commensurate with the optical unit 700, may be used as is suitable for the purpose disclosed herein. In alternative embodiments, the second substrate 682 may be transparent or opaque. The second substrate 682 may have a substantially same shape as the first substrate 681.

The sealing member 683 may be disposed between the first substrate 681 and the second substrate 682. The sealing member 683 may have a rectangular frame shape having an opening (not shown) so that a space is formed between the first and second substrates 681 and 682.

In order to reduce a volume of a discharge space 688 between the first and second substrates 681 and 682, the space-dividing member 684 is disposed between the first and second substrates 681 and 682. Advantageously, the space-dividing member 684 lowers a discharge voltage used to discharge an object in the discharge space 688, thereby reducing power consumption of the optical unit 700.

Referring to FIGS. 14 and 15, the space-dividing member 684 divides the discharge space 688 between the first and second substrates 681 and 682 into at least two discharge spaces. The space-dividing member 684 may include a recess and/or a hole (not shown) to connect the divided discharge spaces 688 to each other.

In exemplary embodiments, each of the discharge spaces 688 may be extended in a first direction and arranged in a second direction substantially perpendicular to the first direction.

A discharge gas (not shown) may be injected into the discharge spaces 688 defined by the first substrate 681, the second substrate 682, the sealing member 683 and the space-dividing member 684. When the discharge voltage is applied to the discharge space 688, the discharge gas generates an invisible light (not shown), including but not limited to, an ultraviolet light.

A first fluorescent layer 686 and a second fluorescent layer 687 may be formed on an inner face of the first substrate 681 and an inner face of the second substrate 682, respectively. The inner face of the first substrate 681 faces the inner face of the second substrate 682. The first and second fluorescent layers 686 and 687 convert the invisible light generated from the discharge gas into the visible light (not shown).

The discharge electrode 685 may be disposed at both ends of the discharge spaces 688 and substantially perpendicular to the space-dividing member 684 such that the discharge electrode 685 intersects with the divided discharge spaces 688. Advantageously, discharge voltage may be applied to each of the discharge spaces 688, so that the discharge occurs in each of the discharge spaces 688.

When the discharge voltage is applied to the discharge electrode 685 formed on an outer face of the first substrate 681 and/or the second substrate 682, the discharge occurs in each discharge spaces 688, so that the invisible light is generated from the discharge gas. The invisible light generated in each of the discharge spaces 688 is converted into the visible light by the first and second fluorescent layers 686 and 687, and the converted visible light transmits through the second substrate 682.

The body 680 mainly emits the visible light, however, a small amount of the invisible light may be leaked from the body 680. When the invisible light is leaked from the body 680, the amount of the visible light is reduced, and parts of the liquid crystal display device disposed adjacent to the body 680 may be damaged due to the invisible light.

Referring to FIGS. 14 and 15, the light recycling member 690 may be formed on the second substrate 682. The light recycling member 690 recycles the invisible light leaked from the body 680 as the visible light. Advantageously, a display apparatus on which images are displayed using the visible light may have enhanced brightness, thereby reducing, or effectively preventing, the deterioration of the liquid crystal due to the invisible light.

The light recycling member 690 may be disposed on the body 680 by exposure to ultraviolet light without using an additional adhesive. Advantageously, a decrease in an amount of the visible light 670 is reduced, or effectively prevented, as the light recycling member 600 is not attached to the additional adhesive.

The light recycling member 690 is a photo-crosslinkable polymer solution that may include a fluorescent substance, a photopolymerizeable initiator, and a photopolymerizeable monomer or a photopolymerizeable oligomer.

The light recycling member 690 may include an acryl-based ultraviolet light curable resin. The acryl-based ultraviolet light curable resin is polymerized by exposing the photopolymerizeable monomer or the oligomer to the ultraviolet light. The photopolymerizeable monomer or the oligomer may include, but is not limited to, an acrylate-based compound, an epoxy acrylate-based compound, a polyester acrylate-based compound, an urethane acrylate-based compound, or the like, as well as any combination including at least one of the foregoing. The photopolymerizeable initiator may include, but is not limited to, an acetophenone-based compound, a benzophenone-based compound, a thioxanthone-based compound, or the like, as well as any combination including at least one of the foregoing. The light recycling member 690, after curing by exposure to the ultraviolet light may have a contraction ratio under about 20 %.

The light recycling member 690 converts the invisible light leaked from the second substrate 682 into the visible light to enhance the amount of the visible light emitted from the second substrate 682. Advantageously, the light recycling member 690 may reduce, or effectively prevent, the deterioration of the parts of the liquid crystal display device adjacent to the body 680 due to the invisible light leaked from the body 680.

### Exemplary Embodiment 18

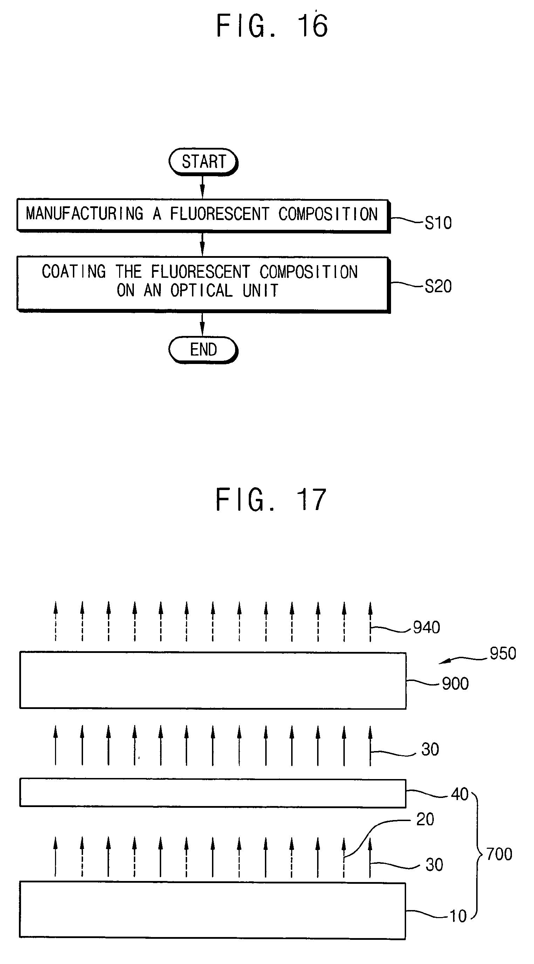

FIG. 16 is a flow chart illustrating an exemplary embodiment of a method of manufacturing a light recycling member according to another embodiment of the present invention.

Referring to FIG. 16, an exemplary embodiment of a manufacturing method of a light recycling member includes a manufacturing process of a fluorescent composition that converts an invisible light into a visible light (S10) and a coating process of the fluorescent composition on an optical unit disposed at a path of the invisible light (S20).

In order to manufacture the light recycling member, a fluorescent substance that may convert the ultraviolet light into the visible light is mixed with a polymer binder, thereby manufacturing the fluorescent composition (S10). In exemplary embodiments, the ultraviolet light may have a wavelength ranging from about 200nm to about 380nm In alternative embodiments, the fluorescent composition may be provided as a fluid solution.

The fluorescent substance of the light recycling member according to an exemplary embodiment of the present invention may include fluorescent materials as follows.

2,2'(2,5-thiophenediyl)bis[5-(1-dimethylethyl)benzoxazole (1)

3-(5-chloro-1,3-benzoxazole-2-yl)-7-(diethylamino)coumarin (2)

2-cyano-1,3-N,N-diethylamino-3-iminobenzimidazolo[1,2-a]pyridino[3,4-b]-2H-chromene (3)

Each of the fluorescent materials (1), (2) and (3) may be mixed into the light recycling member solution equal amounts. For example, two weight percent of the fluorescent materials, based on an amount of methylmethacrylate monomer in the solution, are mixed into the light recycling member solution. Additionally, 0.01 weight percent of a photopolymerizeable initiator, based on the amount of the methylmethacrylate monomer in the solution, is mixed with the solution including the fluorescent materials.

In order to form a polymer coated layer having a cross-linked structure, ten weight percent of hydrohexylmethylmethacrylate, based on the amount of the methylmethacrylate in the solution, is mixed into the solution including the photopolymerizeable initiator.

Another exemplary embodiment of the light recycling member of an optical unit according to another embodiment of the present invention may include fluorescent materials as follows.

2,2(4,4-diophenolvinyl)dibenzoxazol (4)

3-(5-chloro-1,3-benzoxazole-2-yl)-7-(diethylamino)coumarin (5)

2-cyano-1,3-N,N-diethylamino-3-iminobenzimidazolo[1,2-a]pyridino[3,4-b]-2H-chromene (6)

The fluorescent materials (4), (5) and (6) are mixed into the light recycling member solution in a mixing ratio of 2:1:1.5. For example, ten weight percent of the fluorescent materials, based on an amount of methylmethacrylate monomer in the solution, is mixed into the light recycling member solution. Additionally, 0.05 weight percent of a photopolymerizeable initiator, based on the amount of the methylmethacrylate monomer in the solution, is mixed into the solution including the fluorescent materials. In order to form a polymer coated layer having a cross-linked structure, ten weight percent of hydrohexylmethylmethacrylate, based on the amount of the methylmethacrylate in the solution, is mixed into the solution including the photopolymerizeable initiator.

Further, another exemplary embodiment of the light recycling member of an optical unit according to another embodiment of the present invention may include fluorescent materials as follows.

1,4-bis(benzoxazolyl-2-yl)naphthalene (7)

3-(5-chloro-1,3-benzoxazole-2-yl)-7-(diethylamino)coumarin (8)

2-cyano-1,3-N,N-diethylamino-3-iminobenzimidazolo[1,2-aJpyridino[3,4-b]-2H-chromene (9)

The fluorescent materials (7), (8) and (9) are mixed into the light recycling member solution in a mixing ratio of 1:2:1.5. For example, four weight percent of the fluorescent materials, based on an amount of methylmethacrylate monomer in the solution, is mixed into the light recycling member solution. Additionally, 0.02 weight percent of a photopolymerizeable initiator, based on the amount of the methylmethacrylate monomer in the solution, is mixed into the solution including the fluorescent materials.

In order to form a polymer coated layer having a cross-linked structure, thirteen weight percent of hydrohexylmethylmethacrylate, based on the a mount of the methylmethacrylate in the solution, is mixed into the solution including the photopolymerizeable initiator.

In alternative embodiments, the fluorescent substance of the light recycling member may be mixed with a polymer binder such that the fluorescent substance has a thin film.

The polymer binder may include, but is not limited to, an ultraviolet light initiator, a photopolymerizeable monomer and a photopolymerizeable oligomer.

Examples of the ultraviolet light initiator may include, but are not limited to, an acetophenone-based initiator, a benzophenone-based initiator, a thioxanthone-based initiator, or the like. The initiatros may be used alone or in a combination thereof.

Examples of the photopolymerizeable monomer may include, but are not limited to, an acrylate-based monomer, an epoxy acrylate-based monomer, a polyester acrylate-based monomer, an urethane acrylate-based monomer, or the alike. The monomers may be used alone or in a combination thereof.

Examples of the photopolymerizeable oligomer may include, but are not limited to, an acrylate-based oligomer, an epoxy acrylate-based oligomer, a polyester acrylate-based oligomer, an urethane acrylate-based oligomer, or the like. The oligomers may be used alone or in a combination thereof.

In exemplary embodiments, the fluorescent composition including the fluorescent substance, the ultraviolet light initiator, the photopolymerizeable monomer and the photopolymerizeable oligomer may be coated on various positions of the optical unit. Positions of the optical unit may include, but are not limited to, a surface of a light source, a light reflecting cover partially covering the light source, a light incident face of a light guide plate adjacent to the light source, a light reflecting face of the light guide plate, a light exiting face of the light guide plate, a reflecting plate facing the light reflecting face of the light guide plate and an optical member facing the light exiting face of the light guide plate.

The ultraviolet light may be irradiated onto the fluorescent composition coated in the thin film shape, so that the fluorescent composition coated in the thin film shape is cured by a photopolymerization reaction of the fluorescent composition.

In alternative embodiments, a surface of the fluorescent composition coated on the optical unit may have a prism shape, so that the light recycling member may have an enhanced surface area. Advantageously, the light recycling member efficiently converts the invisible light into the visible light.

### Exemplary Embodiment 19

FIG. 17 is a schematic view of an exemplary embodiment of a display apparatus according to another embodiment of the present invention.

Referring to FIG. 17, a display apparatus 950 includes a light source 10, a light recycling member 40 and a display panel 900.

The light source 10 converts an invisible light 20, including but not limited to, an ultraviolet light, into a visible light 30. The light sources 10 may be a cold cathode ray-tube lamp.

The light source 10 mainly emits the visible light 30, however a small amount of the invisible light 20 may be leaked from the light source 10. When the invisible light 20 is leaked from the light source 10, the display panel 900 disposed adjacent to the light source 10 may be damaged due to the invisible light 20. For example, when the display panel 900 is a liquid crystal display panel having liquid crystal, the liquid crystal may be deteriorated.

The light recycling member 40 may be disposed between the light source 10 and the display panel 900. The light recycling member 40 transmits the visible light 30 emitted from the light source 10 and converts the invisible light 20 emitted from the light source 10 into the visible light 30.

The light recycling member 40 may include a fluorescent substance that converts the invisible light 20 into the visible light 30. In alternative embodiments, the light recycling member 40 may further include a polymer binder that allows the fluorescent substance to be formed in a thin film shape.

The display panel 900 converts the visible light 30 passed through the light recycling member 40 into images 940 that may include image information.

Advantageously, the light recycling member 40 may enhance an amount of the visible light 30 used to display images 940 on the display panel 900, thereby improving display quality of the images 940 on the display panel 900 and reducing, or effectively preventing, deterioration of the display panel 900 adjacent to the light source 10 due to the invisible light 20.

### Exemplary Embodiment 20

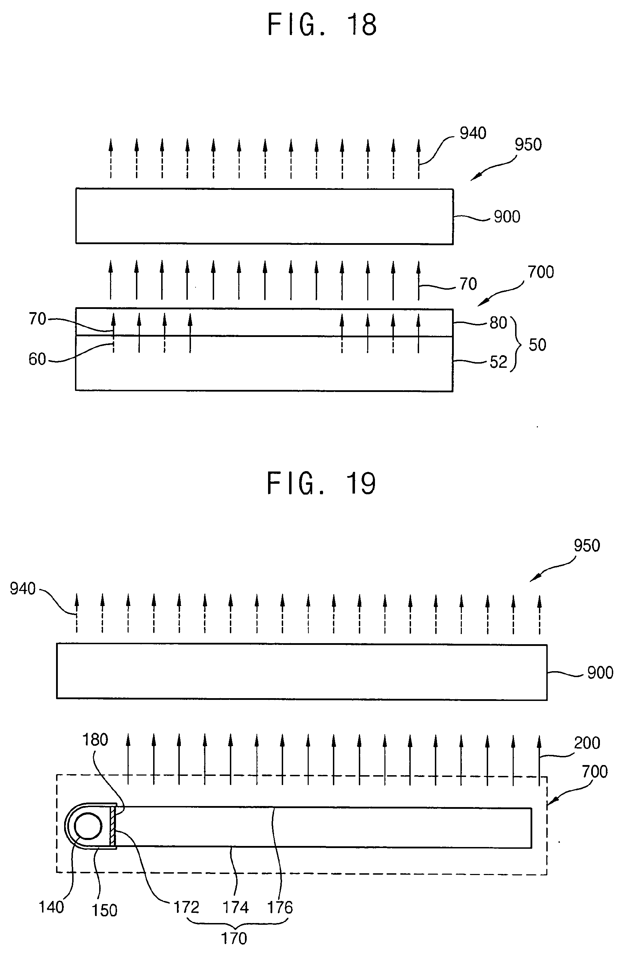

FIG. 18 is a schematic view of an exemplary embodiment of a display apparatus according to another embodiment of the present invention. The display apparatus has a same function and a same structure as those of the display apparatus in FIG. 17 except for the light recycling member. In FIG. 18, the same reference numerals denote the same elements in FIG. 17, and thus any further repetitive descriptions of the same elements will be omitted.

Referring to FIG. 18, the light recycling member 80 is formed on a surface of the light source 50. The light recycling member 80 transmits the visible light 70 emitted from the light source 50 and converts the invisible light 60 leaked from the light source 50 into the visible light 70.

Advantageously, the light recycling member 80 enhances an amount of the visible light 70 used to display images 940 on the display panel 900, thereby preventing deterioration of the display panel 900 adjacent to the light source 50 due to the invisible light 60.

### Exemplary Embodiment 21

FIG. 19 is a schematic view showing an exemplary embodiment of a display apparatus according to another embodiment of the present invention. The display apparatus has a same function and a same structure as those of the display apparatus in FIG. 17 except for the light recycling member and the light guide plate. In FIG. 19, the same reference numerals denote the same elements in FIG. 17, and thus any further repetitive descriptions of the same elements will be omitted.

Referring to FIG. 19, a light source 140 is received in a light reflecting member 150 partially covering the light source 140, and a light guide plate 170 having a light incident face 172, a light reflecting face 174 and a light exiting face 176 is couple with the light reflecting member 150.

A light recycling member 180 may be formed on the light incident face 172 of the light guide plate 170. The light recycling member 180 converts the invisible light leaked from the light source 140 into the visible light. The invisible light leaked from the light source 140 is converted into the visible light by the light recycling member 180, an a mount of the visible light emitted from the light guide plate 170 may be enhanced. Advantageously, the display panel 900 may have improved display quality of an image 940, thereby reducing, or effectively preventing, deterioration of the display panel 900 of the display apparatus 950 due to the invisible light.

In alternative embodiments, the light recycling member 180 may be formed on an inner face of the light reflecting member 150, the light reflecting face 174 of the light guide plate 170 and/or the light exiting face 176 of the light guide plate 170.

### Exemplary Embodiment 22

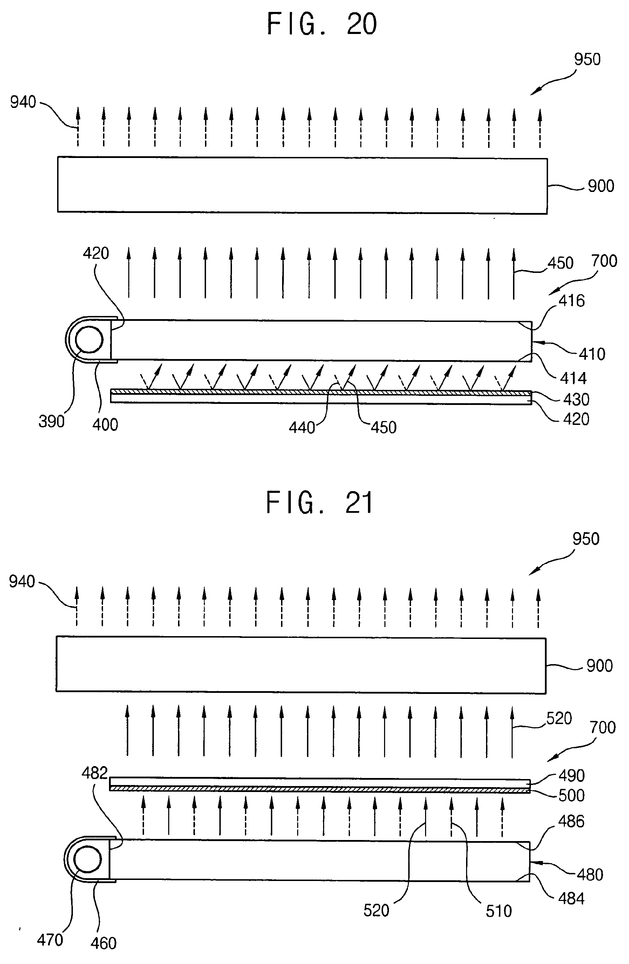

FIG. 20 is a schematic view showing an exemplary embodiment of a display apparatus according to another embodiment of the present invention. The display apparatus has a same function and a same structure as those of the display apparatus in FIG. 17 except for a light recycling member and a reflecting plate. In FIG. 20, the same reference numerals denote the same elements in FIG. 17, and thus any further repetitive descriptions of the same elements will be omitted.

Referring to FIG. 20, the reflecting plate 420 is disposed under the light guide plate 410 such that the reflecting plate 420 faces a light reflecting face 414 of the light guide plate 410. The reflecting plate 420 reflects the visible light 450 leaked from the light reflecting face 414 of the light guide plate 410 to the light guide plate 410. A light recycling member 430 may be formed on the reflecting plate 420. Advantageously, the light recycling member 430 converts the invisible light 440 leaked from the light reflecting face 414 into the visible light 450, thereby improving display quality of an image 940 displayed on the display panel 900 of the display apparatus 950.

### Exemplary Embodiment 23

FIG. 21 is a schematic view showing an exemplary embodiment of a display apparatus according to another embodiment of the present invention. The display apparatus has a same function and a same structure as those of the display apparatus in FIG. 17 except for a light recycling member and an optical member. In FIG. 21, the same reference numerals denote the same elements in FIG. 17, and thus any further repetitive descriptions of the same elements will be omitted.

Referring to FIG. 21, an optical member 490 is disposed between the display panel 900 and the light guide plate 480. The light recycling member 500 is disposed on the optical member 490. The light recycling member 500 converts the invisible light 510 passed through the light source 460 and the light guide plate 480 into the visible light 520. Advantageously, the light recycling member 500 enhances an amount of the visible light 520 incident into the display panel 900, thereby improving display quality of images 940 displayed on the display panel 900 of the display apparatus 950.

### Exemplary Embodiment 24

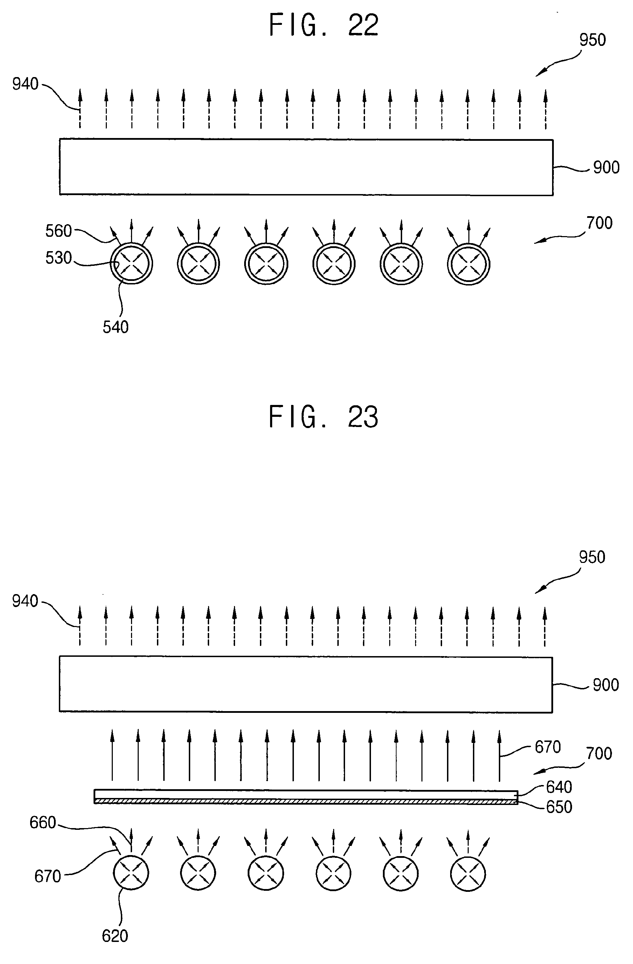

FIG. 22 is a schematic view showing an exemplary embodiment of a display apparatus according to another of the present invention. The display apparatus has a same function and a same structure as those of the display apparatus in FIG. 17 except for a light source. In FIG. 22, the same reference numerals denote the same elements in FIG. 17, and thus any further repetitive descriptions of the same elements will be omitted.

Referring to FIG. 22, the display apparatus 950 includes the display panel 900 and a plurality of light sources 530 disposed under the display panel 900. The light sources 530 convert the invisible light generated in the light sources 530 into the visible light 560 and emit the visible light 560. A light recycling member 540 may be formed on an outer face of the light sources 530 to convert the invisible light into the visible light 560.

Advantageously, the light recycling member 540 converts the invisible light leaked from the light sources 530 into the visible light 560, thereby enhancing an amount of the visible light incident to the display panel 900 and display quality of an image 940 displayed on the display panel 900.

### Exemplary Embodiment 25

FIG. 23 is a schematic view showing an exemplary embodiment of a display apparatus according to another embodiment of the present invention. The display apparatus has a same function and a same structure as those of the display apparatus in FIG. 17 except for an optical member and a light recycling member. In FIG. 23, the same reference numerals denote the same elements in FIG. 17, and thus any further repetitive descriptions of the same elements will be omitted.

Referring to FIG. 23, an optical member 640 is disposed between the display panel 900 and a plurality of light sources 620 under the display panel 900. Advantageously, the optical member 640 reduces, or effectively prevents, a bright line between the light sources 620 spaced apart from each other.

The light recycling member 650 may be disposed on the optical member 640 and convert the invisible light 660 leaked from the light source 620 into the visible light 670. Advantageously, the light recycling member 650 may enhance a light amount of the visible light 670 incident into the display panel 900 and improve display quality of images 940 displayed on the display panel 900 of the display apparatus 950.

### Exemplary Embodiment 26

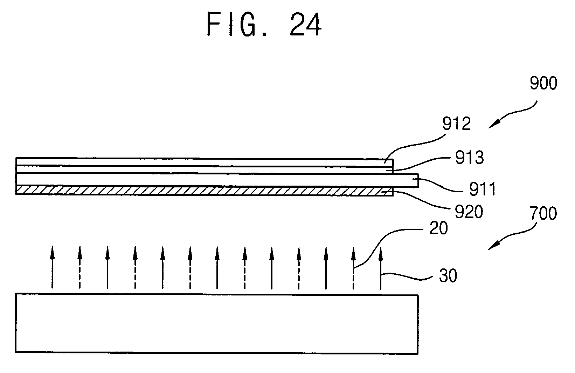

FIG. 24 is a schematic view showing an exemplary embodiment of a display apparatus according to another embodiment of the present invention. The display apparatus has a same function and a same structure as those of the display apparatus in FIG. 17 except for a display panel and a light recycling member. In FIG. 24, the same reference numerals denote the same elements in FIG. 17, and thus any further repetitive descriptions of the same elements will be omitted.

Referring to FIG. 24, a display panel 900 includes a first substrate 911, a second substrate 912 facing the first substrate 911 and a liquid crystal layer 913 disposed between the first substrate 911 and the second substrate 912. In alternative embodiments, the first substrate 911 may include a plurality of pixel electrodes (not shown) formed in a matrix configuration. The pixel electrodes may be electrically connected to a thin film transistor (not shown) to timely receive a driving signal through the thin film transistor at a predetermined timing. The second substrate 912 may also include a common electrode (not shown) formed on the second substrate 912 and faces the pixel electrode.

The display panel 900 may include a light recycling member 920 disposed on the first substrate 911 of the display panel 900. The light recycling member 9 20 converts a visible light 30 emitted from the light source (not shown) of the optical unit 700 and an invisible light 20 leaked from the light source into the visible light 30. Advantageously, display quality of images displayed on the display panel 900 may be improved and deterioration of the liquid crystal layer 913 due to an ultraviolet light may be reduced, or effectively prevented.

According to above exemplary embodiments, the light recycling member converts the invisible light leaked from the light source while the light source emits the visible light into the visible light. Advantageously, the display apparatus may reduce, or effectively prevent, the deterioration of the parts of the liquid crystal display device disposed adjacent to the light source due to the invisible light. Additionally, the light recycling member may enhance the amount of the visible light emitted from the light source, thereby improving the display quality of images displayed on the display panel.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. An optical unit comprising:
a light source to generate an invisible light and convert the invisible light into a visible light; and
a light recycling member to convert the invisible light leaked from the light source into the visible light.

2. The optical unit of claim 1, wherein the light recycling member is integrally formed on a surface of the light source.

3. The optical unit of claim 1, wherein the light source comprises a light reflecting cover partially covering the light source, the light reflecting cover collecting the visible light, and
wherein the light recycling member is formed on an inner face of the light reflecting cover facing the light source.

4. The optical unit of claim 1, wherein the light source has a cylindrical shape.

5. The optical unit of claim 1, further comprising a light guide plate, the light recycling member being disposed on a light incident face of the light guide plate, and the light incident face facing the light source.

6. The optical unit of claim 1, further comprising a light guide plate, the light recycling member having a bead shape, wherein the light recycling member is distributed inside the light guide plate.

7. The optical unit of claim 1, further comprising a light guide plate, the light recycling member being disposed on a light exiting face of the light guide plate.

8. The optical unit of claim 7, wherein the light guide plate further comprises a dot prism pattern formed on a light reflecting face, the light reflecting face being opposite to the light exiting face, and the dot prism pattern comprising a prism portion formed on the dot prism pattern.

9. The optical unit of claim 1, further comprising a light guide plate, the light recycling member being disposed on a light reflecting face, the light reflecting face being opposite a light exiting face of the light guide plate.

10. The optical unit of claim 1, further comprising:
a light guide plate, the light guide plate being disposed adjacent to the light source; and
a reflecting plate disposed at a position facing a light reflecting face, the light reflecting face being opposite a light exiting face of the light guide plate,
wherein the light recycling member is formed on the reflecting plate.

11. The optical unit of claim 1, further comprising:
a light guide, the light guide plate being disposed adjacent to the light source; and
an optical member disposed at a position facing a light reflecting face, the light reflecting face being opposite a light exiting face of the light guide plate,
wherein the light recycling member is formed on the optical member.

12. The optical unit of claim 1, wherein the invisible light comprises a n ultraviolet light.

13. The optical unit of claim 1, wherein the light recycling member comprises:
a fluorescent substance to convert the leaking invisible light into the visible light; and
a polymer binder mixed with the fluorescent substance to allow the fluorescent substance to have a thin film shape.

14. The optical unit of claim 13, wherein the polymer binder comprises an ultraviolet light initiator, and a photopolymerizeable monomer, a photopolymerizeable oligomer, or any combination including at least one of the foregoing.

15. The optical unit of claim 14, wherein the photopolymerizeable monomer comprises an acrylate-based monomer, an epoxy acrylate-based monomer, a polyester acrylate-based monomer, an urethane acrylate-based compound, or any combination including at least one of the foregoing.

16. The optical unit of claim 14, wherein the photopolymerizeable oligomer comprises an acrylate-based oligomer, an epoxy acrylate-based oligomer, a polyester acrylate-based oligomer, an urethane acrylate-based oligomer, or any combination including at least one of the foregoing.

17. The optical unit of claim 14, wherein the ultraviolet light initiator comprises an acetophenone-based initiator, a benzophenone-based initiator, a thioxanthone-based initiator, or any combination including at least one of the foregoing.

18. The optical unit of claim 1, wherein the light recycling member comprises at least one selected from the group consisting of:
(1) 2,2'(2,5-thiophenediyl)bis[5-(1,1-dimethylethyl)benzoxazole,
(2) 3-(5-chloro-1,3-benzoxazole-2-yl)-7-(diethylamino)coumarin, and
(3) 2-cyano-1,3-N,N-diethylamino-3-iminobenzimidazolo[1,2-a]pyridino[3,4-b]-2H-chromene.

19. The optical unit of claim 18, wherein each of the fluorescent materials is mixed with the light recycling member in equal amounts.

20. The optical unit of claim 1, wherein the light recycling member comprises at least one selected from the group consisting of:
(1) 2,2'(4,4-diphenolvinyl)dibenzoxazol,
(2) 3-(5-chloro-1,3-benzoxazole-2-yl)-7-(diethylamino)coumarin, and
(3) 2-cyano-1,3-N,N-diethylamino-3-iminobenzimidazolo[1,2-a]pyridino[3,4-b]-2H-chromene.

21. The optical unit of claim 20, wherein each of the fluorescent materials is mixed with the light recycling member in a mixing ratio of about 2:1:1.5.

22. The optical unit of claim 1, wherein the light recycling member comprises at least one selected from the group consisting of:
(1) 1,4-bis(benzoxazolyl-2-yl)naphthalene,
(2) 3-(5-chloro-1,3-benzoxazole-2-yl)-7-(diethylamino)coumarin, and
(3) 2-cyano-1,3-N,N-diethylamino-3-iminobenzimidazolo[1,2-a]pyridino[3,4-b]-2H-chromene.

23. The optical unit of claim 22, wherein each of the fluorescent materials is mixed with the light recycling member in a mixing ratio of about 1:2:1.5.

24. The optical unit of claim 1, wherein the light source is extended in a first direction and at least two light sources are arranged in parallel in a second direction substantially perpendicular to the first direction.

25. The optical unit of claim 24, further comprising a reflecting plate disposed under the light source, the light recycling member being formed on the reflecting plate.

26. The optical unit of claim 24, further comprising an optical member disposed on the light source, the light recycling member being formed on the optical member.

27. The optical unit of claim 26, wherein the optical member is a diffusing plate.

28. The optical unit of claim 1, wherein the light source comprises a light emitting body having a generally rectangular parallelepiped shape, the light recycling member formed on the light emitting body, a nd a plurality of light emitting spaces formed inside the light emitting body.

29. The optical unit of claim 28, wherein the light emitting body comprises a first substrate, a second substrate a sealing member, a space-dividing member and a discharge electrode.

30. A method of manufacturing a light recycling member to convert an invisible light from a light source into a visible light, the method comprising:
forming a fluorescent substance composition into which a fluorescent substance and a polymer binder are; and
forming the fluorescent substance composition on an optical unit such that the fluorescent substance composition has a thin film shape, said forming comprising a photopolymerizeable reaction.

31. The method of claim 30, wherein the polymer binder comprises an ultraviolet light initiator, and a photopolymerizeable monomer, a photopolymerizeable oligomer, or any combination including at least one of the foregoing.

32. The method of claim 31, wherein the photopolymerizeable monomer comprises an acrylate-based monomer, an epoxy acrylate-based monomer, a polyester acrylate-based monomer, an urethane acrylate-based compound, or any combination including at least one of the foregoing.

33. The method of claim 31, wherein the photopolymerizeable oligomer comprises an acrylate-based oligomer, an epoxy acrylate-based oligomer, a polyester acrylate-based oligomer, an urethane acrylate-based oligomer, or any combination including at least one of the foregoing.

34. The method of claim 31, wherein the ultraviolet light initiator comprises an acetophenone-based initiator, a benzophenone-based initiator, a thioxanthone-based initiator, or any combination including at least one of the foregoing.

35. The method of claim 30, wherein the fluorescent substance comprises at least one selected from the group consisting of:
(1) 2,2'(2,5-thiophenediyl)bis[5-(1,1-dimethylethyl)benzoxazole,
(2) 3-(5-chloro-1,3-benzoxazole-2-yl)-7-(diethylamino)coumarin, and
(3) 2-cyano-1,3-N,N-diethylamino-3-iminobenzimidazolo[1,2-a]pyridino[3,4-b]-2H-chromene.

36. The method of claim 30, wherein the fluorescent substance comprises at least one selected from the group consisting of:
(1) 2,2'(4,4-diphenolvinyl)dibenzoxazol,
(2) 3-(5-chloro-1,3-benzoxazole-2-yl)-7-(diethylamino)coumarin, and
(3) 2-cyano-1,3-N,N-diethylamino-3-iminobenzimidazolo[1,2-a]pyridino[3,4-b]-2H-chromene.

37. The method of claim 30, wherein the fluorescent substance comprises at least one selected from the group consisting of:
(2) 1,4-bis(benzoxazolyl-2-yl)naphthalene,
(2) 3-(5-chloro-1,3-benzoxazole-2-yl)-7-(diethylamino)coumarin, and
(3) 2-cyano-1,3-N,N-diethylamino-3-iminobenzimidazolo[1,2-a]pyridino[3,4-b]-2H-chromene.

38. The method of claim 30, wherein the fluorescent substance composition has a prism shape in longitudinal cross-section and is formed at the optical unit in a thin film shape.

39. A display apparatus comprising:
an optical unit comprising:
a light source to generate an invisible light and convert the invisible light into a visible light; and
a light recycling member to convert the invisible light leaked from the light source into the visible light; and
a display panel to change the visible light into an image light having image information.

40. The display apparatus of claim 39, wherein the light recycling member comprises a polymer fluorescent layer formed on a surface of the light source.

41. The display apparatus of claim 39, wherein the light recycling member is formed on a surface of the light source.

42. The display apparatus of claim 39, further comprising a light guide plate, the light recycling member being disposed on a light incident face of the light guide plate.

43. The display apparatus of claim 39, further comprising a light guide plate, the light recycling member being disposed on a light exiting face and/or a light reflecting face, the light exiting face and/or a light reflecting face coupled with a light incident face of the light guide plate.

44. The display apparatus of claim 39, further comprising:
a light guide plate, the light guide plate being disposed adjacent to the light source; and
a reflecting plate disposed at a position being opposite to a light reflecting face, the light reflecting face being coupled to a light incident face of the light guide plate,
wherein the light recycling member is formed on the reflecting plate.

45. The display apparatus of claim 39, further comprising:
a light guide plate, the light guide plate being disposed adjacent to the light source; and
an optical member disposed at a position facing a light exiting face, the light exiting face coupled to a light incident face of the light guide plate,
wherein the light recycling member is formed on the optical member.

46. The display apparatus of claim 39, wherein the light source is extended in a first direction and at least two light sources are arranged in parallel in a second direction substantially perpendicular to the first direction.

47. The display apparatus of claim 39, further comprising an optical member disposed on the light source, the light source being extended in a first direction and at least two light sources being arranged in parallel in a second direction substantially perpendicular to the first direction,
wherein the light recycling member being formed on the optical member.

48. The display apparatus of claim 39, wherein the light source comprises a light emitting body having a generally rectangular parallelepiped shape, the light recycling member formed on the light emitting body, and a plurality of light emitting spaces are formed inside the light emitting body.

49. The display apparatus of claim 39, wherein the display panel comprises:
a first substrate having a first electrode and facing the light source;
a second substrate having a second electrode and facing the first substrate; and
a liquid crystal layer disposed between the first and second substrates.

50. The display apparatus of claim 49, wherein the light recycling member is formed on the first substrate facing the light source.
